(19) Europäisches Patentamt
European Patent Office
Office européen des brevets

(11) **EP 4 726 680 A1**

(12) **EUROPEAN PATENT APPLICATION**
published in accordance with Art. 153(4) EPC

(43) Date of publication:
**15.04.2026 Bulletin 2026/16**

(51) International Patent Classification (IPC):
*G06V 40/16* (2022.01)

(21) Application number: **24848164.0**

(86) International application number:
**PCT/CN2024/107768**

(22) Date of filing: **26.07.2024**

(87) International publication number:
**WO 2025/026207 (06.02.2025 Gazette 2025/06)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **03.08.2023 CN 202310969507**

(71) Applicant: **Tencent Technology (Shenzhen) Company Limited**
**Shenzhen, Guangdong 518057 (CN)**

(72) Inventors:
• **HE, Keke**
**Shenzhen, Guangdong 518057 (CN)**
• **ZHU, Junwei**
**Shenzhen, Guangdong 518057 (CN)**
• **TAI, Ying**
**Shenzhen, Guangdong 518057 (CN)**
• **WANG, Chengjie**
**Shenzhen, Guangdong 518057 (CN)**

(74) Representative: **EP&C**
**P.O. Box 3241**
**2280 GE Rijswijk (NL)**

(54) **FACIAL IMAGE REPLACEMENT METHOD AND APPARATUS, AND DEVICE, STORAGE MEDIUM AND PROGRAM PRODUCT**

(57) A facial image replacement method and apparatus, and a device, a storage medium and a program product. The method comprises: acquiring a first sample image, a second sample image and a sample replacement image (210); using sample noise data to perform n instances of noise addition on the sample replacement image in a time dimension, so as to obtain a sample noise-added image (220); in the process of performing facial area replacement on the first sample image and the second sample image by means of a facial image replacement model, performing prediction on the basis of the sample noise-added image, so as to obtain predicted noise data (230); and using the difference between the sample noise data and the predicted noise data to train the facial image replacement model, so as to obtain a trained facial image replacement model (240). By means of the above manner, a facial replacement process can be implemented while removing noise, thus solving the problem of the facial replacement generation effect being relatively poor caused by the relatively low image definition, and improving the robustness of a trained facial image replacement model, which can be applied to various scenarios such as cloud technology, artificial intelligence and smart traffic.

```
┌──────────────────────────────────────────────────────────────┐
│ Acquire a first sample image, a second sample image, and a    │──210
│ sample replacement image                                       │
└──────────────────────────────────────────────────────────────┘
                              ↓
┌──────────────────────────────────────────────────────────────┐
│ Perform noise addition on the sample replacement image n times │──220
│ by using sample noise data, to obtain a sample noisy image     │
└──────────────────────────────────────────────────────────────┘
                              ↓
┌──────────────────────────────────────────────────────────────┐
│ Obtain predicted noise data based on the sample noisy image    │──230
└──────────────────────────────────────────────────────────────┘
                              ↓
┌──────────────────────────────────────────────────────────────┐
│ Train a facial image replacement model by using a difference   │──240
│ between the sample noise data and the predicted noise data, to  │
│ obtain a trained facial image replacement model               │
└──────────────────────────────────────────────────────────────┘
```

FIG. 2

EP 4 726 680 A1

**Description**

RELATED APPLICATION

This application claims priority to Chinese Patent Application No. 202310969507.7, filed with the China National Intellectual Property Administration on August 3, 2023 and entitled "FACIAL IMAGE REPLACEMENT METHOD AND APPARATUS, AND DEVICE AND STORAGE MEDIUM", which is incorporated herein by reference in its entirety.

FIELD OF THE TECHNOLOGY

Embodiments of the present disclosure relate to the field of computer technologies, and in particular, to a facial image replacement method and apparatus, a device, a storage medium, and a program product.

BACKGROUND OF THE DISCLOSURE

Facial image replacement has a wide range of application scenarios, such as in film and television portrait production, game character design, and virtual avatar creation. Taking the film and television production scenario as an example, when an actor cannot complete a professional-level action, the action may be completed by a professional first, and the face of the professional is replaced later by using a facial image replacement process, allowing film and television production to be completed while ensuring safety of the actor.

In a general process, after a first image and a second image for facial image replacement are obtained, facial keypoint extraction is performed on both images, respectively. Multiple first facial keypoints corresponding to a first facial region from the first image are identified, as well as multiple second facial keypoints corresponding to a second facial region from the second image. Further, the second facial region from the second image is replaced with the first facial region from the first image according to a facial landmark registration result between the first image and the second image and a corresponding relationship between the multiple first facial keypoints and the multiple second facial keypoints, thereby implementing a face replacement process.

However, in the foregoing method, image definition of the first image and the second image is not fully considered. When the image definition of the first image and the second image is relatively low, accuracy of extraction results of the first and second facial keypoints is also relatively low. Further, after the face replacement process is implemented according to the corresponding relationship between the first and second facial keypoints, the quality of the resulting replaced facial image is poor, which significantly affects the face replacement effect.

SUMMARY

All embodiments of the present disclosure provide a facial image replacement method and apparatus, a device, a storage medium, and a program product, which can implement a face replacement process while removing noise, thereby avoiding a problem of a poor face replacement effect caused by low image definition and improving the robustness of a trained facial image replacement model. The technical solutions are as follows.

According to one aspect, a facial image replacement method is provided, including:

acquiring a first sample image, a second sample image, and a sample replacement image, the sample replacement image being an image obtained by replacing a second facial region from the second sample image with a first facial region from the first sample image;

performing noise addition on the sample replacement image n times by using sample noise data, to obtain a sample noisy image, n being a positive integer;

obtaining predicted noise data based on the sample noisy image; and

training a facial image replacement model by using a difference between the sample noise data and the predicted noise data, to obtain a trained facial image replacement model;

wherein the trained facial image replacement model is configured to replace a second facial region from a second image with a first facial region from a first image.

According to another aspect, a facial image replacement method is provided, including:

acquiring a first image and a second image;

acquiring a noise map, the noise map being a randomly acquired or preset map representing noise data;

replacing a second facial region of the second image with a first facial region of the first image by denoising the noise map by using the first image and the second image as image guidance information, to obtain the face replacement image.

According to another aspect, a facial image replacement apparatus is provided, including:

an image acquisition module, configured to acquire a first sample image, a second sample image, and a sample replacement image, the sample replacement image being an image obtained by replacing a second facial region from the second sample image with a first facial region from the first sample image;

an image noise-adding module, configured to perform noise addition on the sample replacement image n times by using sample noise data, to obtain a sample noisy image, n being a positive integer;

a noise prediction module, configured to obtain predicted noise data based on the sample noisy image; and

a model training module, configured to train a facial image replacement model by using a difference between the sample noise data and the predicted noise data, to obtain a trained facial image replacement model, the trained facial image replacement model being configured to replace a second facial region from a second image with a first facial region from a first image.

According to another aspect, a facial image replacement apparatus is provided, including:

an image acquisition module, configured to acquire a first image and a second image;

a noise acquisition module, configured to acquire a noise map, the noise map being a randomly acquired or preset map representing noise data;

a denoising module, configured to replace a second facial region of the second image with a first facial region of the first image by denoising the noise map by using the first image and the second image as image guidance information, to obtain the face replacement image.

According to another aspect, a computer device is provided, the computer device including a processor and a memory, the memory having at least one instruction, at least one program, a code set, or an instruction set stored therein, the at least one instruction, the at least one program, the code set, or the instruction set being loaded and executed by the processor to implement the facial image replacement method as described in any one of the foregoing embodiments of the present disclosure.

According to another aspect, a computer-readable storage medium is provided, the storage medium having at least one instruction, at least one program, a code set, or an instruction set stored therein, the at least one instruction, the at least one program, the code set, or the instruction set being loaded and executed by a processor to implement the facial image replacement method as described in any one of the foregoing embodiments of the present disclosure.

According to another aspect, a computer program product or a computer program is provided, the computer program product or the computer program including computer instructions, the computer instructions being stored in a computer-readable storage medium. A processor of a computer device is configured to read the computer instructions from the computer-readable storage medium. The processor executes the computer instructions, causing the computer device to perform the facial image replacement method as described in any one of the foregoing embodiments.

The technical solutions provided in the embodiments of the present disclosure achieve at least the following beneficial effects.

When performing facial region replacement between the first sample image and the second sample image by using the facial image replacement model, the predicted noise data is obtained based on the sample noisy image obtained after noise addition is performed on the sample replacement image n times by using the sample noise data, and then the facial image replacement model is trained by using the difference between the sample noise data and the predicted noise data. A prediction process of performing noise distribution on the sample noisy image by using the facial image replacement model helps to enable the facial image replacement model to learn a noise relationship between sample images (the first sample image and the second sample image) and the sample noisy image. By further incorporating reference replacement between the sample replacement image, and the first/second sample images, it is conducive to improving a process of analyzing noise by the facial image replacement model in a targeted manner. Further, an image with relatively low definition is adjusted in a targeted manner by using a noise prediction process, to remove noise and implement a face replacement process, thereby preventing a problem of a relatively poor generation effect of face replacement due to relatively low image definition and improving robustness of the trained facial image replacement model, which helps to apply the trained facial image replacement model to a wider range of face replacement scenarios.

BRIEF DESCRIPTION OF THE DRAWINGS

To describe the technical solutions in all embodiments of the present disclosure more clearly, the following briefly introduces the accompanying drawings required for describing the embodiments. Apparently, the accompanying drawings in the following description show only embodiments of the present disclosure, and a person of ordinary skill in the art may still derive other drawings from these accompanying drawings without creative efforts.

FIG. 1 is a schematic diagram of an implementation environment according to embodiments of the present disclosure.

FIG. 2 is a flowchart of a facial image replacement method according to embodiments of the present disclosure.

FIG. 3 is a flowchart of a facial image replacement method according to embodiments of the present disclosure.

FIG. 4 is a schematic diagram of acquiring a sample replacement image according to embodiments of the present disclosure.

FIG. 5 is a schematic diagram of noise-addition processing according to embodiments of the present disclosure.

FIG. 6 is a schematic flowchart of acquiring predicted noise data according to embodiments of the present disclosure.

FIG. 7 is a flowchart of a facial image replacement method according to embodiments of the present disclosure.

FIG. 8 is a schematic structural diagram of a facial image replacement model according to embodiments of the present disclosure.

FIG. 9 is a schematic diagram of an encoder network and a decoder network according to embodiments of the present disclosure.

FIG. 10 is a flowchart of a facial image replacement method according to embodiments of the present disclosure.

FIG. 11 is a schematic diagram of denoising according to embodiments of the present disclosure.

FIG. 12 is a structural block diagram of a facial image replacement apparatus according to embodiments of the present disclosure.

FIG. 13 is a structural block diagram of a facial image replacement apparatus according to embodiments of the present disclosure.

FIG. 14 is a structural block diagram of a server according to embodiments of the present disclosure.

DESCRIPTION OF EMBODIMENTS

To make the objectives, technical solutions, and advantages of the present disclosure clearer, the following further describes implementations of the present disclosure in detail with reference to the accompanying drawings.
Terms involved in all embodiments including the embodiments of both the claims and the specification (hereinafter referred to as "all embodiments of this disclosure") of the present disclosure will be briefly introduced below.
In all embodiments of the present disclosure, a sample replacement image representing reference information is acquired, and noise addition is performed on the sample replacement image n times in a time dimension by using sample noise data, to obtain a sample noisy image. In a process of performing facial region replacement between a first sample image and a second sample image by using a facial image replacement model, predicted noise data corresponding to a facial region replacement process is predicted by using the sample noisy image, and then the facial image replacement model is trained by using a difference between the sample noise data and the predicted noise data. A prediction process of performing noise distribution on the sample noisy image by using the facial image replacement model helps to enable the facial image replacement model to learn a noise relationship between sample images (including the first sample image and the second sample image) and the sample noisy image. By further incorporating reference replacement between the sample replacement image, and the first/second sample images, it is conducive to improving a process of analyzing noise by the facial image replacement model in a targeted manner. Further, an image with relatively low definition is adjusted in a targeted manner by using a noise prediction process, to remove noise and implement a face replacement process, thereby preventing a problem of a relatively poor generation effect of face replacement due to relatively low image definition and improving robustness of the trained facial image replacement model, which helps to apply the trained facial image replacement model to a wider range of face replacement scenarios.

The information (including, but not limited to, user equipment information, user personal information, and the like), data (including, but not limited to, data for analysis, stored data, displayed data, and the like), and signals involved in the present disclosure are all authorized by a user or fully authorized by each party, and the collection, use, and processing of relevant data need to comply with relevant laws and regulations of relevant regions. For example, the first sample image, the second sample image, the sample replacement image, the facial image replacement model, the first image, the second image, and other content as referred to in the present disclosure are all acquired under full authorization.

An implementation environment as referred to in the embodiments of the present disclosure is described below. A facial image replacement method provided in the embodiments of the present disclosure may be performed by a terminal alone, by a server, or by a terminal and a server together through data interaction, which is not limited in the embodiments of the present disclosure. Descriptions are provided below by using an example in which a terminal and a server interact to perform the facial image replacement method.

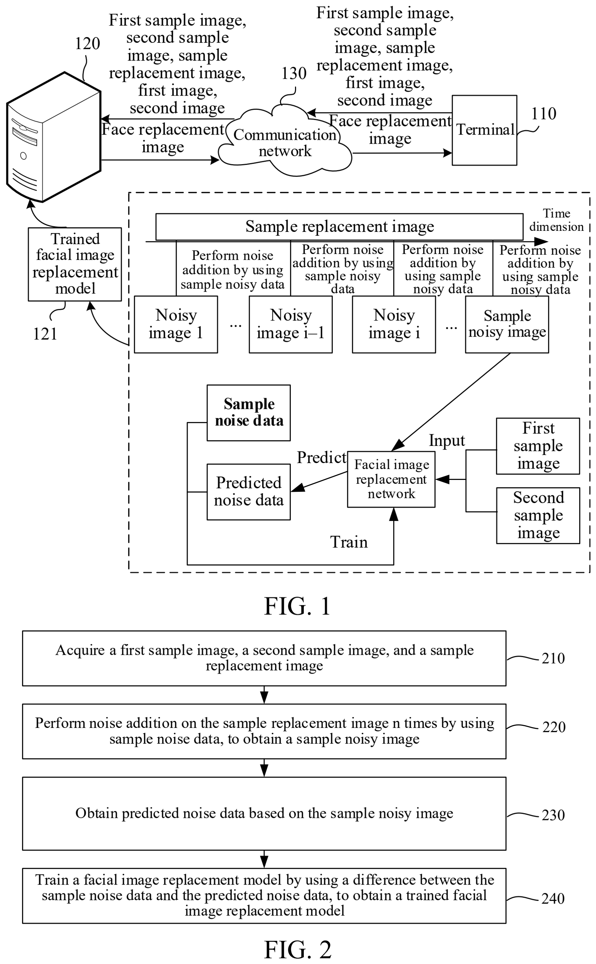

Referring to FIG. 1, the implementation environment includes a terminal 110 and a server 120. The terminal 110 is connected to the server 120 by using a communication network 130.

In all embodiments, the terminal 110 has an image acquisition function and is configured to obtain at least one of a first sample image, a second sample image, and a sample replacement image. The sample replacement image is an image obtained by replacing a second facial region from the second sample image with a first facial region from the first sample image (e.g., by swapping a first facial region from the first sample image with a second facial region from the second sample image). After acquiring the first sample image and the second sample image, the terminal 110 performs face replacement between the first sample image and the second sample image by using a pre-trained facial image replacement model, to obtain the sample replacement image.

In all embodiments, after acquiring the first sample image, the second sample image, and the sample replacement image, the terminal 110 transmits the first sample image, the second sample image, and the sample replacement image to the server 120 by using the communication network 130, so that the server 120 obtains the first sample image, the second sample image, and the sample replacement image. Alternatively, after acquiring the first sample image and the second sample image, the terminal 110 transmits the first sample image and the second sample image to the server 120 by using the communication network 130. The server 120 performs face replacement between the first sample image and the second sample image by using the pre-trained facial image replacement model, to obtain the sample replacement image, so that the server 120 obtains the first sample image, the second sample image, and the sample replacement image.

In all embodiments, the server 120 performs noise addition on the sample replacement image n times in a time dimension by using sample noise data, to obtain a sample noisy image, where n is a positive integer.

In all embodiments, a facial image replacement model 121 is configured on the server 120. The facial image replacement model 121 is a to-be-trained model, and the facial image replacement model 121 is trained by using the first sample image, the second sample image, and the sample noisy image that is obtained by performing noise addition on the sample replacement image n times.

In all embodiments, in the process of performing facial image replacement between the first sample image and the second sample image by using the facial image replacement model 121, prediction is performed based on the sample noisy image to obtain predicted noise data. In addition, the server 120 trains the facial image replacement model 121 according to a difference between the sample noise data and the predicted noise data, to obtain the trained facial image replacement model 121. The trained facial image replacement model 121 is configured to replace a second image with a facial region from a first image. The foregoing process is an example of a non-exclusive case of a training process of the facial image replacement model 121.

In all embodiments, the terminal 110 transmits the first image and the second image, on which face replacement needs to be performed, to the server 120 by using the communication network, and the server 120 performs a face replacement process on the first image and the second image by using the trained facial image replacement model 121 and generates a face replacement image after face replacement. The face replacement image can exclude, to a larger extent, a problem of noise interference that may exist in the face replacement process, and even when both the first image and the second image have relatively low definition, a face replacement image with relatively high image quality can be generated. In all embodiments, the server 120 may transmit the generated face replacement image to the terminal 110 by using

using the communication network 130, so that the terminal 110 can render and display the face replacement image on a screen of the terminal 110.

In all embodiments, the terminal includes, but is not limited to, mobile terminals such as a mobile phone, a tablet computer, a portable laptop computer, a smart voice interaction device, a smart home appliance, and a vehicle-mounted terminal, and may alternatively be implemented as a desktop computer or the like. The foregoing server may be an independent physical server, or may be a server cluster or a distributed system formed by a plurality of physical servers, or may be a cloud server that provides basic cloud computing services such as a cloud service, a cloud database, cloud computing, a cloud function, cloud storage, a network service, cloud communication, a middleware service, a domain name service, a security service, a content delivery network (CDN), big data, and an artificial intelligence platform.

A cloud technology is a hosting technology that unifies a series of resources such as hardware, applications, and a network in a wide area network or a local area network, to implement data computing, storage, processing, and sharing. The cloud technology, a general term for a network technology, an information technology, an integration technology, a management platform technology, and an application technology that are applied based on a business mode of cloud computing, can form a resource pool and can be used on demand, which is flexible and convenient.

In all embodiments, the foregoing server may be further implemented as a node in a blockchain system.

With reference to the brief introduction to the terms and the application scenarios, the facial image replacement method provided in the present disclosure is described by using an example in which the method is applied to a server. As shown in FIG. 2, the method includes the following operation 210 to operation 240.

Operation 210: Acquire a first sample image, a second sample image, and a sample replacement image.

In all embodiments, the first sample image and the second sample image are images including facial regions.

In all embodiments, the first sample image and the second sample image are images pre-stored in an image library; or the first sample image and the second sample image are images captured by using an image capturing device; or the first sample image and the second sample image are images randomly acquired from a network.

In all embodiments, the first sample image and the second sample image may alternatively be image frames in a video work. For example, the first sample image and the second sample image may be image frames pre-selected or randomly selected from a video work such as a film and television work, a variety show work, or an animation work.

In all embodiments, the sample replacement image is an image obtained by replacing a second facial region from the second sample image with a first facial region from the first sample image.

In all embodiments, the facial region included in the first sample image is referred to as the first facial region, and the facial region included in the second sample image is referred to as the second facial region. A facial region is configured for representing a region occupied by a face, and is configured for referring to a region in which face replacement is performed.

In all embodiments, the first sample image is configured to replace the second sample image. Therefore, the first sample image may be referred to as a source image, and the second sample image may be referred to as a target image.

In all embodiments, the sample replacement image is acquired by using a pre-trained facial image replacement model.

In all embodiments, the pre-trained facial image replacement model is acquired. The model is obtained by training a large quantity of sample images, has a face replacement function, and can perform a face replacement process with relatively high accuracy based on two sample images. In the process of training the facial image replacement model provided in the embodiments of the present disclosure, the first sample image and the second sample image are inputted to the to-be-trained model, to obtain a sample replacement image corresponding to the first sample image and the second sample image. The sample replacement image is used as a reference image, to train the to-be-trained model based on the sample replacement image.

In all embodiments, the sample replacement image is annotated with a sample label, and the sample label may be at least one of a true label and a pseudo label.

In all embodiments, if a sample replacement image obtained by using a pre-trained model is used as the reference image, a sample label with which the sample replacement image is annotated is a pseudo label. After the sample replacement image is obtained by using the pre-trained model, accuracy analysis and sample label annotation are manually performed on the sample replacement image, and the sample replacement image whose accuracy meets a preset requirement is used as the reference image, so the sample label is a true label.

In all embodiments, a plurality of sample images are acquired. If any one of the plurality of sample images is used as the first sample image, any sample image other than the first sample image in the plurality of sample images may be determined as the second sample image, and then a sample replacement image after fae replacement is acquired based on the first sample image and the second sample image. That is, the sample replacement image has a face replacement relationship with the first sample image and the second sample image.

In all embodiments of the present disclosure, the plurality of sample images acquired include a sample image A, a sample image B, and a sample image C. If the sample image A is determined as the first sample image, either of the sample image B and the sample image C may be determined as the second sample image for face replacement with the first sample image. For example, if face replacement is performed on the sample image A and the sample image B, the second sample image is the sample image B, and face replacement is performed based on the sample image A and the sample image B to obtain a sample replacement image 1. The sample replacement image 1 has a face replacement relationship with the sample image A and the sample image B. Similarly, if face replacement is performed on the sample image A and the sample image C, the second sample image is the sample image C, and face replacement is performed based on the sample image A and the sample image C to obtain a sample replacement image 2. The sample replacement image 2 has a face replacement relationship with the sample image A and the sample image C.

Similarly, if the sample image B is determined as the first sample image, either of the sample image A and the sample image C may be determined as the second sample image for face replacement with the first sample image. Based on the foregoing process, a sample replacement image 3 having a face replacement relationship with the sample image B and the sample image A may be further acquired, and/or a sample replacement image 4 having a face replacement relationship with the sample image B and the sample image C may be further acquired.

Using the sample image A and the sample image B as an example, the sample image A may be determined as the first sample image and the sample image B may be determined as the second sample image, or the sample image B may be determined as the first sample image and the sample image A may be determined as the second sample image. Such different selections may affect a face replacement direction, and two sample replacement images generated accordingly may also be different. For example, when the sample image A is the first sample image and the sample image B is the second sample image, the sample image B is replaced with the sample image A. When the sample image B is the first sample image and the sample image A is the second sample image, the sample image A is replaced with the sample image B. Therefore, face replacement relationships respectively represented by the sample replacement image 1 and the sample replacement image 3 are different.

The foregoing is merely an illustrative example. The first sample image, the second sample image, and the sample replacement image are all images acquired with full authorization, which is not limited in all embodiments of the present disclosure.

Operation 220: Perform noise addition on the sample replacement image n times by using sample noise data, to obtain a sample noisy image.

In all embodiments, after the sample replacement image is acquired, noise addition is performed on the sample replacement image n times in the time dimension (i.e., in a time sequence) by using the sample noise data, and an image obtained after $n^{th}$ noise addition is referred to as the sample noisy image.

In all embodiments, the sample noise data is preselected noise data.

In all embodiments, the sample noise data is implemented as fixed noise values. When noise addition is performed on the sample replacement image n times in the time dimension by using the sample noise data, a value of the sample noise data used during each noise addition is fixed, that is, a noise difference between any two adjacent noisy images is sample noise data with a fixed value.

In all embodiments, the sample noise data is implemented as noise values with a certain change rule. When noise addition is performed on the sample replacement image n times in the time dimension by using the sample noise data, a value of the sample noise data used during each noise addition is determined according to a preset change rule, that is, a noise difference between any two adjacent noisy images is a value determined based on the preset change rule, which may be the same or different. For example, the preset change rule may represent that in 10 noise addition processes, sample noise data used in the first 5 noise addition processes is a first noise value, and sample noise data used in the last 5 noise addition processes is a second noise value different from the first noise value.

In all embodiments, noise addition is performed on a sample replacement image at each of n moments represented by time-series distribution by using the sample noise data, so that each moment corresponds to a noisy image. The noisy image is image content determined based on moments (time-series information) and the sample noise data.

In all embodiments, two adjacent noisy images are noisy images respectively corresponding to two adjacent moments. Therefore, the two adjacent noisy images are adjacent in the time dimension. For example, a moment t5 and a moment t6 are adjacent to each other in the time dimension, and a noisy image that is in the n noisy images and corresponds to the moment t5 is a noisy image P5, and a noisy image that is in the n noisy images and corresponds to the moment t6 is a noisy image P6. Then, the noisy image P5 and the noisy image P6 are two adjacent noisy images in the time dimension.

In all embodiments, when noise addition is performed on the sample replacement image n times in the time dimension, noise-addition processing is performed on the sample replacement image in an iterative noise addition manner of n iterations. For example, noise-addition processing is performed on the sample replacement image at a moment t1, to obtain a noisy image P1, then noise-addition processing is performed on the noisy image P1 at a moment t2, to obtain a noisy image P2, and so on. Therefore, after n iterations, an $n^{th}$ noisy image obtained after an $n^{th}$ iteration of noise addition is determined as the sample noisy image.

In all embodiments, when noise addition is performed on the sample replacement image n times in the time dimension, n moments are selected according to time-series distribution in the time dimension, and noise-addition processing is performed on the sample replacement image by using a preset noise-addition policy at the n moments. The preset noise-addition policy is determined based on a moment parameter related to a moment and a noise parameter related to the sample noise data. For example, n moments are selected, and noise-addition processing is performed on the sample replacement image by using the preset noise-addition policy at a moment t1, to obtain the noisy image P1. Then, noise-addition processing is performed on the sample replacement image by using the preset noise-addition policy at a moment t2, to obtain the noisy image P2. Based on the moment parameter in the preset noise-addition policy, the noisy image P1 and the noisy image P2 that correspond to different moments t1 and t2 and are obtained after noise-addition processing are different. The sample noisy image is a noisy image obtained after noise-addition processing is performed on the sample replacement image by using the preset noise-addition policy at a moment tn. Since the preset noise-addition policy is related to the moment tn and the sample noise data, the sample noisy image has an association relationship with the moment tn and the sample noise data.

In all embodiments, in the n noisy images distributed in time series, noise intensity is positively correlated with the time-series distribution. For example, the time-series distribution is a moment t1, a moment t2, and the like. Noise intensity of the noisy image P2 corresponding to the moment t2 is higher than noise intensity of the noisy image P1 corresponding to the moment t1, and a sample noisy image corresponding to the moment tn has the highest noise intensity.

In all embodiments, the noise-addition processing is implemented by adding noise. In all embodiments, the noise is implemented as Gaussian noise. The noise-addition processing is implemented by adding the Gaussian noise. Intensity of the Gaussian noise is adjusted by changing a parameter that affects the Gaussian noise. The parameter includes at least one of a mean value, a standard deviation, noise intensity, and a smoothness level.

Operation 230: Obtain predicted noise data based on the sample noisy image. The predicted noise data is obtained in a process of performing facial region replacement between the first sample image and the second sample image by using the facial image replacement model.

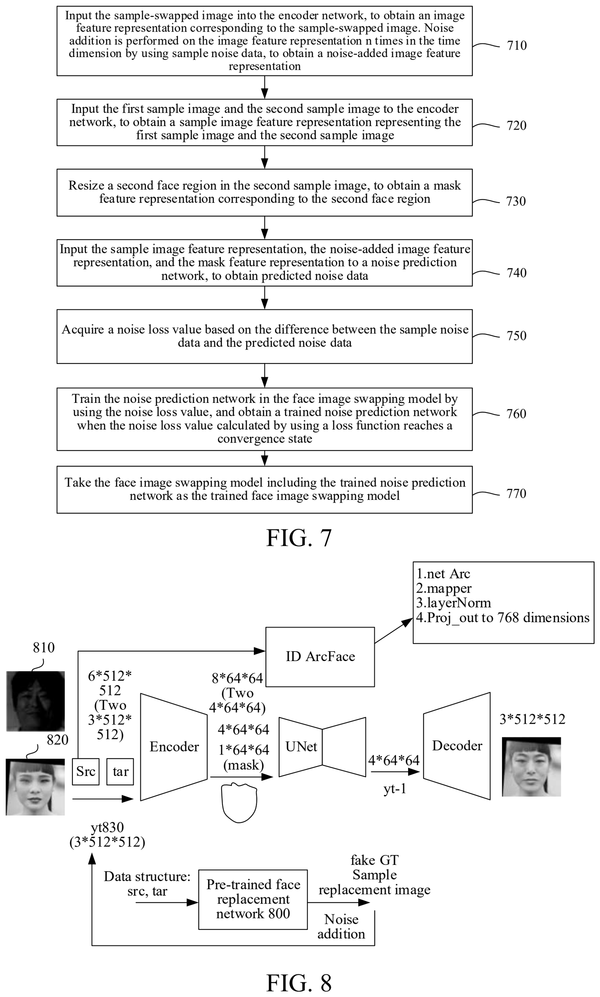

In all embodiments, the facial image replacement model is a neural network model, and is a model structure obtained after a stable diffusion model is improved. A convolutional network for biological medical image segmentation (UNet) used in the stable diffusion model is retained in the facial image replacement model, to implement, by using the UNet, a reverse denoising process represented by the stable diffusion model. A specific structure of the facial image replacement model is described below, referring to FIG. 8.

In all embodiments, n moments are selected based on the time-series distribution, each moment corresponds to a noisy image, and each noisy image may be referred to as a noisy image after the noise-adding operation.

In all embodiments, a noisy image obtained after $n^{th}$ noise addition is used for a model training process, that is, model training is performed on the facial image replacement model by using a sample noisy image obtained after the $n^{th}$ noise addition.

The facial image replacement model is a to-be-trained model, and is configured to perform a face replacement between the first sample image and the second sample image during model training.

In all embodiments, in the process of performing facial region replacement between the first sample image and the second sample image by using the facial image replacement model, prediction is performed based on the sample noisy image to obtain the predicted noise data.

The predicted noise data is configured for obtaining the sample replacement image by restoration based on the sample noisy image. In all embodiments, the predicted noise data is configured for denoising the sample noisy image, to obtain the sample replacement image by restoration by using the first sample image and the second sample image as much as possible.

In all embodiments, in the process of performing facial region replacement between the first sample image and the second sample image by using the facial image replacement model, a denoised noise value when the sample noisy image is denoised at least once is predicted, and the denoised noise value is determined as the predicted noise data.

In all embodiments, in the process of performing facial region replacement between the first sample image and the second sample image n times by using the facial image replacement model, prediction is performed based on the sample noisy image to obtain n pieces of predicted noise data.

In all embodiments, the predicted noise data is configured for representing a prediction result corresponding to each restoration process when the sample noisy image is gradually restored to the sample replacement image. The predicted noise data is configured for performing iterative denoising on the sample noisy image multiple times, to reduce noise on the sample noisy image as much as possible by using the first sample image and the second sample image as much as possible and obtain the sample replacement image by restoration.

For example, the n pieces of predicted noise data are prediction results obtained after prediction on noise added during the $n^{th}$ noise addition, and each piece of predicted noise data is a prediction result obtained after prediction on noise added during the noise addition corresponding thereto.

Based on this, there is a corresponding relationship between at least one piece of predicted noise data and the sample noise data. Therefore, the facial image replacement model can be trained based on the predicted noise data and the sample noise data.

In all embodiments, the facial image replacement model is trained by using n noisy images, the facial image replacement model is trained once by using each noisy image, and iterative training is performed n times on the facial image replacement model by using n noisy images having a time-series distribution relationship, to implement a process of performing iterative training n times on the facial image replacement model under one sample replacement image.

In all embodiments, taking a process of perform $i^{th}$ training on the facial image replacement model by using an $i^{th}$ noisy image as an example, since training the facial image replacement model is to perform facial region replacement between the first sample image and the second sample image, the $i^{th}$ training process for the facial image replacement model is a process of performing facial region replacement between the first sample image and the second sample image by using the facial image replacement model. That is, in a process of performing $i^{th}$ facial region replacement between the first sample image and the second sample image by using the facial image replacement model, the first sample image, the second sample image, and the $i^{th}$ noisy image are used as input to the facial image replacement model, and predicted noise data corresponding to the $i^{th}$ facial region replacement process in which the $i^{th}$ noisy image participates in model training is determined based on the first sample image, the second sample image, and the $i^{th}$ noisy image.

In all embodiments, when a sample noisy image is known, an objective of learning of the facial image replacement model is: to learn how much noise on the sample noisy image is reduced so that a noise-reduced image can have a more accurate image replacement relationship with the first sample image and the second sample image, so as to obtain the sample replacement image by restoration.

In all embodiments, the image replacement relationship is configured for representing a replacement condition followed when the face replacement image is acquired by using the first sample image and the second sample image. The image replacement relationship includes at least one of a plurality of image information replacement relationships such as a facial keypoint replacement relationship, a background replacement relationship, and an expression replacement relationship.

In all embodiments, the facial keypoint replacement relationship between the first sample image and the second sample image is implemented as that in a to-be-obtained face replacement image, a second facial region from the second sample image needs to be replaced with facial keypoints corresponding to a first facial region from the first sample image.

The background replacement relationship is implemented as that in the to-be-obtained face replacement image, an image background of the first sample image is not displayed, and an image background of the second sample image is retained.

The expression replacement relationship is implemented as that in the to-be-obtained face replacement image, a facial expression of the second facial region from the second sample image is retained. For example, a facial expression of the first facial region from the first sample image is calm, and the facial expression of the second facial region from the second sample image is laughing, and the expression replacement relationship indicates that a facial expression of the face replacement image is laughing.

In all embodiments, based on the image replacement relationship represented by the first sample image and the second sample image, the facial image replacement model performs prediction based on the sample noisy image to obtain predicted noise data, and the predicted noise data is configured for obtaining a sample replacement image by prediction.

In all embodiments, n facial region replacement processes are performed on the first sample image and the second sample image by using the facial image replacement model, and prediction is performed based on the sample noisy image to obtain predicted noise data respectively corresponding to the n facial region replacement processes.

In all embodiments, n pieces of predicted noise data are obtained by prediction by using the sample noisy image, and each piece of predicted noise data is configured for obtaining a noisy image by restoration before noise-addition processing, so that a sample replacement image is obtained by prediction by using the n pieces of predicted noise data. For example, after 3 noise addition processes are performed on the sample replacement image, a noisy image 1, a noisy image 2, and a sample noisy image (noisy image 3) are obtained. 3 pieces of predicted noise data are obtained by prediction by using the sample noisy image, respectively representing predicting predicted noise data obtained during restoration from the sample noisy image to the noisy image 2, representing predicting predicted noise data obtained during restoration from the noisy image 2 to the noisy image 1, representing predicting predicted noise data obtained during restoration from the noisy image 1 to the sample replacement image, and the like.

In all embodiments, the UNet configured for noise prediction in the stable diffusion model is retained in the facial image replacement model. When prediction is performed based on the sample noisy image to obtain the predicted noise data, a noise prediction process is performed by using the UNet in the facial image replacement model according to the image replacement relationship represented by the first sample image and the second sample image, to obtain the predicted noise data.

In all embodiments, the facial image replacement model can denoise the sample noisy image at least once based on the predicted noise data and the sample noisy image, to obtain the predicted noise data by prediction.

In all embodiments, the predicted noise data is implemented as a predicted noise map. Noise is generally represented on an image as isolated pixels or pixel blocks that cause a relatively strong visual effect. Therefore, when noise on a sample noisy image is described, noise situations respectively corresponding to different pixel positions when the sample noisy image is analyzed may be represented by using a predicted noise map. For example, an image dimension of the predicted noise map is the same as an image dimension of the sample noisy image.

In all embodiments, in an example in which the predicted noise data is a predicted noise map, since the predicted noise data is obtained after the sample noisy image is analyzed under a condition of the image replacement relationship represented by the first sample image and the second sample image, noise values corresponding to different pixel positions in the predicted noise map may be different based on information represented by the image replacement relationship.

For example, in the facial keypoint replacement relationship in the image replacement relationship, it indicates that a pixel 1 in the sample noisy image is implemented as information A at a nose in the first sample image, and a noise value of a pixel 1' corresponding to the pixel 1 in the predicted noise map is determined based on the information A. The noise value indicates that: if the noise value is removed at the pixel 1 in the sample noisy image, an image that is more conducive to clearly displaying the information A at the nose may be obtained.

In all embodiments, based on the foregoing process, noise values respectively corresponding to a plurality of pixels are determined by using the image replacement relationship, so as to obtain the predicted noise map. A plurality of pixels in the predicted noise map is in one-to-one correspondence to a plurality of pixels in the sample noisy image, and noise values respectively corresponding to the plurality of pixels in the predicted noise map are values determined based on the image replacement relationship, so as to implement a face replacement process more precisely when predicted noise is used.

The foregoing is merely an illustrative example. This is not limited in the embodiments of the present disclosure.

Operation 240: Train a facial image replacement model by using a difference between the sample noise data and the predicted noise data, to obtain a trained facial image replacement model.

In all embodiments, after the sample noise data and the predicted noise data are obtained, the difference between the sample noise data and the predicted noise data is determined, to obtain a noise loss value.

In all embodiments, the sample noise data is implemented as a sample noise map, and the predicted noise data is implemented as a predicted noise map. Since both the sample noise map and the predicted noise map are obtained based on the sample noisy image, a plurality of pixels in the sample noise map is in one-to-one correspondence to a plurality of pixels in the predicted noise map. Pixel value differences respectively corresponding to the pixels are determined based on the corresponding relationship between the pixels, so as to obtain a noise loss value between the sample noise data and the predicted noise data based on the pixel value differences respectively corresponding to the plurality of pixels.

In all embodiments, the facial image replacement model is trained by using the noise loss value until the trained facial image replacement model is obtained.

In all embodiments, a model parameter of the facial image replacement model is adjusted based on the noise loss value, to obtain an intermediate model. The trained facial image replacement model is obtained in response to that training of the intermediate model based on the noise loss value reaches a training objective.

In all embodiments, the model parameter of the facial image replacement model is adjusted with an objective of reducing the noise loss value. For example, the noise loss value is reduced by using gradient descent. Alternatively, the noise loss value is reduced by using a back propagation algorithm.

In all embodiments, during the training of the intermediate model by using the noise loss value, the trained facial image replacement model is obtained after the training of the intermediate model reaches the training objective.

In all embodiments, in response to that the noise loss value reaches a convergence state, an intermediate model obtained by the most recent iterative training is determined as the trained facial image replacement model.

In all embodiments, the noise loss value reaching a convergence state is configured for indicating that a value of the noise loss value obtained by using a loss function no longer changes or variation magnitude is less than a preset threshold.

The trained facial image replacement model is configured to replace a second image with a facial region from a first image. For example, he trained facial image replacement model is configured to replace a second facial region from a second image with a first facial region from a first image.

In all embodiments, after the trained facial image replacement model is obtained, the first image and the second image for face replacement are inputted into the trained facial image replacement model, so as to perform a face replacement process by using the first image and the second image.

The trained facial image replacement model is configured to perform, during denoising, the face replacement process by using the image replacement relationship between the first image and the second image. Therefore, in addition to inputting the first image and the second image to the trained facial image replacement model, random noise data is further inputted into the trained facial image replacement model, so that the trained facial image replacement model denoises the random noise data multiple times by using the image replacement relationship between the first image and the second image, to replace the second image with the facial region from the first image.

In all embodiments, an image obtained after the second image is replaced with the facial region from the first image is referred to as a face replacement image. The face replacement image is an image obtained after the random noise data is denoised by using the image replacement relationship between the first image and the second image, which can prevent noise interference during the face replacement between the first image and the second image and can also focus on more essential information (information represented by the image replacement relationship) when the first image and the second image have relatively low definition, so that the face replacement image has relatively strong stability.

The foregoing is merely an illustrative example. This is not limited in the embodiments of the present disclosure.

In summary, a prediction process of performing noise distribution on the sample noisy image by using the facial image replacement model helps to enable the facial image replacement model to learn a noise relationship between sample images and the sample noisy image. By further incorporating reference replacement between the sample replacement image, and the first/second sample images, it is conducive to improving a process of analyzing noise by the facial image replacement model in a targeted manner. Further, an image with relatively low definition is adjusted in a targeted manner by using a noise prediction process, to remove noise and implement a face replacement process, thereby preventing a problem of a relatively poor generation effect of face replacement due to relatively low image definition and improving robustness of the trained facial image replacement model, which helps to apply the trained facial image replacement model to a wider range of face replacement scenarios.

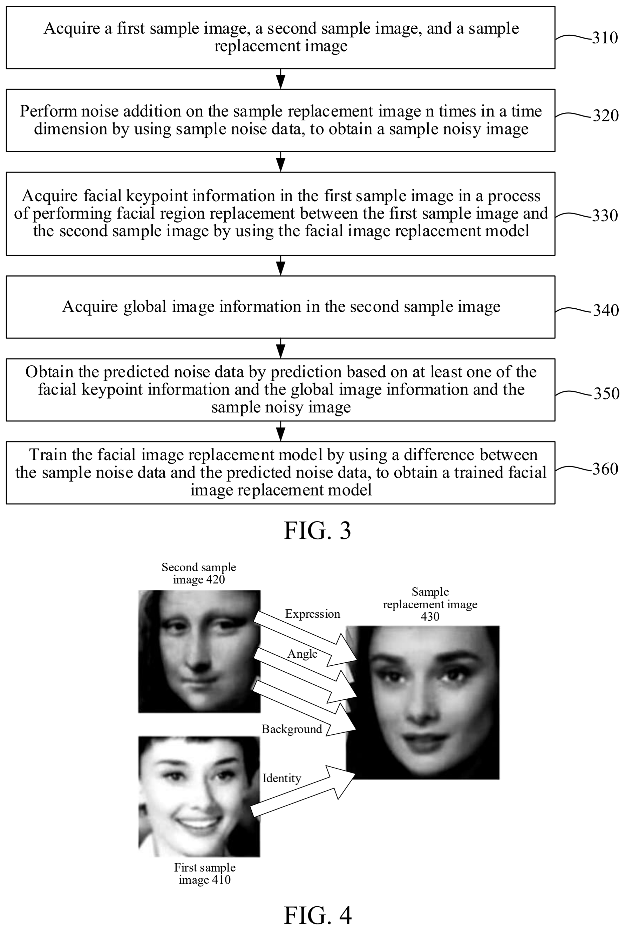

In all embodiments, in the process of performing facial region replacement between the first sample image and the second sample image by using the facial image replacement model, the predicted noise data is acquired by using at least one type of information represented by the first sample image and the second sample image. As shown in FIG. 3, the embodiment shown in FIG. 2 may alternatively be implemented as the following operation 310 to operation 360. Operation 230 may alternatively be implemented as the following operation 330 to operation 350.

Operation 310: Acquire a first sample image, a second sample image, and a sample replacement image.

In all embodiments, the first sample image and the second sample image are images including facial regions.

The sample replacement image is an image obtained by replacing a second facial region from the second sample image with a first facial region from the first sample image.

In all embodiments, before the first sample image and the second sample image are acquired, the two images including facial regions are acquired. Considering that a facial region from an image generally occupies a relatively small position, after the image is acquired, face detection is first performed on the image, to obtain the facial region. Then, facial landmark registration is performed in the facial region to obtain keypoints of a face, including at least keypoints of eyes and mouth corners. The facial landmark registration is a technique used in image processing to locate the coordinates of keypoints such as facial feature points (including eyes, nose, mouth, etc.) on a face by using a deep learning model (such as a convolutional neural network) or an algorithm (such as ASM (Active Shape Model), LBF (Local Binary Features), etc.), so as to accurately calibrate the positions of keypoints such as facial feature points, In addition, cropped facial images are obtained according to the facial keypoints, and are determined as the first sample image and the second sample image. That is, after the images are preprocessed, facial images with clearer facial regions are obtained and are determined as the first sample image and the second sample image.

In all embodiments, the first sample image and the second sample image that are configured for generating the sample replacement image are determined based on the face replacement relationship among the first sample image, the second sample image, and the sample replacement image, and the first sample image, the second sample image, and the sample replacement image are combined into a triplet. When there are a plurality of sample images, a plurality of triplets may be obtained based on this process.

In all embodiments, if it is determined that the first sample image and the second sample image that are configured for generating the sample replacement image 1 are the sample image A and the sample image B, a formed triplet may be represented as "sample image A-sample image B-sample replacement image 1".

FIG. 4 is a schematic diagram of acquiring a sample replacement image by using a first sample image 410 and a second sample image 420. Based on a guarantee of an identity represented by the first sample image 410, an expression, an angle, and a background represented by the second sample image 420 are analyzed, so that when the second sample image 420 is replaced with the first sample image 410, the identity of the first sample image is maintained, and the second sample image 420 is replaced with information such as facial features represented by a face in the first sample image 410, to obtain a sample replacement image 430.

Operation 320: Perform noise addition on the sample replacement image n times in a time dimension by using sample noise data, to obtain a sample noisy image.

n is a positive integer.

In all embodiments, n iterations of noise addition are performed on the sample replacement image in the time dimension by using sample noise data with a same noise value, to obtain n noisy images, where an $n^{th}$ noisy image is the sample noisy image.

A noise difference between two adjacent noisy images in the n noisy images is the sample noise data.

In all embodiments, in a process of performing n iterations of noise addition on the sample replacement image in the time dimension, noise-addition processing is first performed on the sample replacement image, and then noise-addition processing is performed on the sample replacement image again. For example, in a first noise addition process (for example, implemented as a moment t1 representing time-series information), noise-addition processing is performed on the sample replacement image, to obtain the noisy image P1. In a second noise addition process (for example, implemented as a moment t2 representing time-series information), noise-addition processing is performed on the noisy image P1, to obtain the noisy image P2, so as to obtain sample noisy images after n iterations of noise addition. The n noisy images are distributed in time series.

In all embodiments, n iterations of noise addition are performed on the sample replacement image in the time dimension by using sample noise data with different noise values, to obtain the n noisy images distributed in time series, where an $n^{th}$ noisy image is the sample noisy image.

A noise difference between a $v^{th}$ noisy image and a $v+1^{th}$ noisy image is the sample noise data used during a $v^{th}$ iteration of noise addition, and v is a positive integer no greater than n.

In all embodiments, n moments are selected in the time dimension according to time-series distribution. At the n moments, noise-addition processing is performed on the sample replacement image by using a preset noise-addition policy, to obtain n noisy images distributed in time series, where an $n^{th}$ noisy image is the sample noisy image.

In all embodiments, n moments are selected in the time dimension according to time-series distribution, the n moments are different from each other, and different moments represent different pieces of time-series information.

In all embodiments, the preset noise-addition policy is implemented as a preset noise-addition formula, the noise-addition formula includes a moment parameter representing time-series information, and moment parameters corresponding to different moments have different values. When noise-addition processing is performed on the sample replacement image by using the n moments and the preset noise-addition policy, due to differences between the n moments, noisy images obtained after noise-addition processing is performed on the sample replacement image based on the noise-addition formula are also different.

In all embodiments, a noise parameter representing the sample noise data further exists in the preset noise-addition policy (noise-addition formula). The noise parameter is implemented as noise intensity. Sample noise data between two adjacent moments is determined based on a preset noise change rule, which may be the same or different. In all embodiments, when noise-addition processing is performed on the sample replacement image n times by using the noise-addition formula, a value of a noise parameter representing noise intensity remains unchanged in each noise-addition processing process. Alternatively, when noise-addition processing is performed on the sample replacement image n times by using the noise-addition formula, the value of the noise parameter representing noise intensity may change in different noise-addition processing processes.

In all embodiments, the noise-addition formula is implemented as the following formula (1).

$$ yt = \alpha t y0 + (1 - \alpha t)\varepsilon \qquad (1) $$

where yt is configured for representing a sample noisy image obtained after noise-addition processing at a moment *t; at* is configured for representing time-series information corresponding to the moment *t;* y0 is configured for representing a sample replacement image; ε is configured for representing a noise parameter (for example, noise intensity of Gaussian noise).

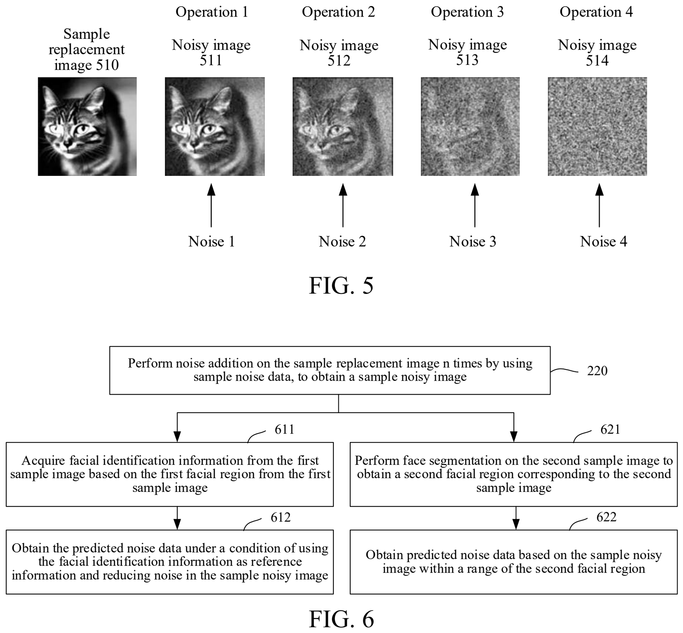

In all embodiments, FIG. 5 is a schematic diagram of noise-addition processing. A noise-addition processing process is performed based on a sample replacement image 510. FIG. 5 may be implemented as a schematic diagram of performing iterative noise-addition on the sample replacement image 510 or may alternatively be implemented as a schematic diagram of performing noise addition on the sample replacement image 510 by using a preset noise-addition policy.

This embodiment is based on an example in which FIG. 5 is implemented as a schematic diagram of performing iterative noise-addition on the sample replacement image 510. In a first noise-addition processing process (operation 1), a noisy image 511 is obtained after noise 1 is added to the sample replacement image 510. In a second noise-addition processing process (operation 2), a noisy image 512 is obtained after noise 2 is added to the noisy image 511. In a third noise-addition processing process (operation 3), a noisy image 513 is obtained after noise 3 is added to the noisy image 512. In a fourth noise-addition processing process (operation 4), a noisy image 514 is obtained after noise 4 is added to the noisy image 513. If the noisy image 514 is an image obtained after the last noise-addition processing, the noisy image 514 is the sample noisy image.

The foregoing four noise-addition processing processes are merely illustrative examples, and a quantity of times of noise-addition processing may be randomly set or preset, which is not limited herein.

Operation 330: Acquire facial keypoint information in the first sample image in a process of performing facial region replacement between the first sample image and the second sample image by using the facial image replacement model.

In all embodiments, the UNet in the stable diffusion model is retained in the facial image replacement model, to implement, by using UNet, a reverse denoising process represented by the stable diffusion model.

In all embodiments, the facial image replacement model is trained at least once by using the sample noisy image. For example, by using n processing situations represented by n noise addition processes, the facial image replacement model is trained n times by using the sample noisy image, to implement a process of performing iterative training on the facial image replacement model n times under one sample noisy image.

In all embodiments, input of the facial image replacement model includes the first sample image, the second sample image, and the sample noisy image. While denoising the sample noisy image based on the first sample image and the second sample image, the facial image replacement model learns information in a process of performing face replacement between the first sample image and the second sample image.

In all embodiments, the facial image replacement model analyzes the first sample image and acquires facial keypoint information in the first sample image.

The facial keypoint information includes a plurality of facial keypoints, and the facial keypoint information is configured for describing keypoints of facial features in the first facial region.

In all embodiments, after the first sample image is acquired, facial keypoints corresponding to the first facial region are identified by using the facial image replacement model, to acquire facial keypoints representing facial features in the first facial region.

In all embodiments, a plurality of pieces of information such as a shape, a color, and a thickness of the facial features can be acquired by using the plurality of facial keypoints. Schematically, information such as a shape, a color, and a position of a lip relative to the first facial region can be approximately determined by using a plurality of lip keypoints in the plurality of facial keypoints. Alternatively, information such as a shape, a height, and a position of a nose relative to the first facial region can be approximately determined by using a plurality of nose keypoints in the plurality of facial keypoints.

Operation 340: Acquire global image information in the second sample image.

The global image information includes at least one of image angle information, image background information, and facial expression information.

In all embodiments, the image angle information is configured for representing an orientation, such as a positive orientation or a side orientation, of a face in the second facial region from the second sample image. The image background information is configured for representing a background region other than the second facial region from the second sample image. The facial expression information is configured for representing an expression, such as happiness, anger, sadness, or joy, of the face in the second facial region from the second sample image.

In all embodiments, the second sample image is analyzed by using the facial image replacement model, to obtain the global image information corresponding to the second sample image.

In all embodiments, an image background of the second sample image is analyzed by using the facial image replacement model, to obtain the image background information corresponding to the second sample image. A facial angle of the second sample image is analyzed by using the facial image replacement model, to obtain the image angle information corresponding to the second sample image. A facial expression of the second sample image is analyzed by using the facial image replacement model, to obtain the facial expression information corresponding to the second sample image.

Operation 350: Obtain the predicted noise data by prediction based on at least one of the facial keypoint information and the global image information and the sample noisy image.

In all embodiments, the predicted noise data is obtained by prediction based on the facial keypoint information and the sample noisy image. Alternatively, the predicted noise data is obtained by prediction based on the global image information and the sample noisy image. Alternatively, the predicted noise data is obtained by prediction based on the facial keypoint information, the global image information, and the sample noisy image.

In all embodiments, at least one of the facial keypoint information and the global image information is used as image guidance information.

In all embodiments, an objective of determining the facial keypoint information and the global image information is to: determine, by using the image replacement relationship between the first sample image and the second sample image, roles of the facial keypoint information and the global image information during synthesis of the face replacement image.

For example, the facial keypoint information is configured for determining the status of facial features representing the first facial region during synthesis of the face replacement image. The global image information is configured for determining a background, an expression, a facial angle, and the like in the second sample image during synthesis of the face replacement image.

In all embodiments, in the process of performing facial region replacement between the first sample image and the second sample image by using the facial image replacement model, facial keypoint information is used as the image guidance information, or the global image information is used as the image guidance information, or the facial keypoint information and the global image information are used as the image guidance information.

The image guidance information is configured for predicating noise in the sample noisy image when the sample noisy image is denoised.

In all embodiments, the facial keypoints corresponding to the first sample image and the global image information corresponding to the second sample image are used as the image guidance information, so that the facial image replacement model predicts, as accurately as possible, noise that helps to more fully display the image guidance information.

In all embodiments, the predicted noise data is obtained under a condition of using the image guidance information as reference information and reducing the noise in the sample noisy image to a preset noise threshold.

In all embodiments, after at least one type of information is selected as the image guidance information, the image guidance information is used as the reference information. The reference information is used as a reference basis for reducing noise in the sample noisy image while the first sample image and the second sample image are learned.

In all embodiments, after the image guidance information is determined, the sample noisy image approaches the image guidance information, so as to enable an image obtained by denoising the sample noisy image to better display the image guidance information (the facial keypoint information and/or the global image information) than the sample noisy image, and noise that is predicted in the approaching process and needs to denoise the sample noisy image is referred to as predicted noise data. The predicted noise data is determined based on the sample noisy image under a condition of using the image guidance information as reference information.

Operation 360: Train the facial image replacement model by using a difference between the sample noise data and the predicted noise data, to obtain a trained facial image replacement model.

In all embodiments, after the sample noise data and the predicted noise data are obtained, the difference between the sample noise data and the predicted noise data is determined, to obtain a noise loss value; and the facial image replacement model is trained by using the noise loss value until the trained facial image replacement model is obtained.

The trained facial image replacement model is configured to replace a second image with a facial region from a first image.

In all embodiments, random noise data is acquired; the random noise data, the first image, and the second image are inputted to the trained facial image replacement model; the trained facial image replacement model analyzes, based on the random noise data, facial keypoint information corresponding to the first image and/or global image information corresponding to the second image; and the random noise data is denoised multiple times by using the image replacement relationship between the first image and the second image and by using the facial keypoint information corresponding to the first image and/or the global image information corresponding to the first image as guidance information, so as to replace the facial region from the first image with the second image, to obtain the face replacement image.

The foregoing is merely an illustrative example. This is not limited in all embodiments of the present disclosure.

In all embodiments of the present disclosure, the trained facial image replacement model is obtained by training from two perspectives: denoising and face replacement, and has stronger robustness and prediction accuracy, so that a face replacement image whose face replacement effect is less affected by interference can be obtained. By using the facial keypoint information corresponding to the first image and/or the global image information corresponding to the second image as guidance information, accuracy of obtaining, by the facial image replacement model, the sample replacement image by restoration by using the sample noisy image is improved as much as possible. In addition, the predicted noise data during the denoising is analyzed, which can prevent noise interference in the face replacement process between the first image and the second image and can also focus on more essential information (information represented by the image replacement relationship) when the first image and the second image have relatively low definition, so that the face replacement image has relatively strong stability.

In all embodiments, when the predicted noise data is obtained by using the facial image replacement model, face identification analysis may also be performed on the first sample image and facial region analysis may be performed on the second sample image, to acquire the predicted noise data more precisely under a certain condition. As shown in FIG. 6, when face identification analysis is performed on the first sample image to acquire the predicted noise data, operation 230 shown in FIG. 2 above may be implemented as the following operation 611 to operation 612. When facial region analysis is performed on the second sample image to acquire the predicted noise data, operation 230 shown in FIG. 2 above may be implemented as the following operation 621 to operation 622.

Operation 611: Acquire facial identification information from the first sample image based on the first facial region from the first sample image.

The facial identification information is configured for representing identity information represented by the first facial region. The following embodiment describes how to acquire the facial identification information.

In all embodiments, the first sample image is inputted to an identification recognition network to obtain a first identification feature representation.

The identification recognition network is a pre-trained neural network.

In all embodiments, the identification recognition network includes at least one of the following pre-trained models: an additive angular margin loss for deep face recognition (ArcFace) model configured for deep face recognition, a large margin cosine loss for deep face recognition (CosFace) model, a deep hypersphere embedding for face recognition (SphereFace), and the like.

In all embodiments, the first sample image is inputted into the above identification recognition network to obtain a first identification feature representation representing identity information of the first facial region. For example, by using net Arc in FIG. 8, a first identification feature representation corresponding to the first sample image, for example, an ID feature of 1*512 dimensions, is obtained.

In all embodiments, non-linear mapping is performed on the first identification feature representation by using a transformer network, to obtain an encoded feature representation. For example, multi-layer non-linear mapping is performed on the first identification feature representation by using a 5-layer transformer network. The encoded feature representation is more related to the face replacement process.

In all embodiments, the encoded feature representation is presented in a matrix form, and a quantity of first sample images inputted to the identification recognition network is at least one. If a plurality of first sample images are inputted to the identification recognition network, for example, 1 group (batch) includes 20 first sample images, one dimension may be added to the matrix form. Different columns in the dimension represent different first sample images.

In all embodiments, the encoded feature representation passes through a normalization (layerNorm) layer, to normalize the encoded feature representation in a feature dimension, to obtain a normalized feature representation. When the encoded feature representation in a matrix form is normalized by using the layerNorm, different feature values of the first sample image are processed. When a plurality of first sample images are included, different feature values of each first sample image are processed by taking a column as an analysis object.

For example, an encoded feature representation corresponding to any first sample image x is analyzed. A feature value corresponding to the first sample image x in the encoded feature representation is determined, and a mean value $E$ [$X$] and variance $Var[x]$ are respectively calculated based on a plurality of feature values corresponding to the first sample image x. Further, a normalized feature representation obtained after the encoded feature representation is normalized is obtained, as shown in the following formula (2):

$$y = \frac{x - E[X]}{\sqrt{Var[x] + \epsilon}} * \gamma + \beta \qquad (2)$$

where $\gamma$ and $\beta$ are an additionally learned parameter; and $\epsilon$ is a small parameter ensuring that the variance $Var[x]$ is not 0.

In all embodiments, the normalized feature representation passes through a fully connected layer, to obtain a second identification feature representation corresponding to the first sample image, and the second identification feature representation is used as facial identification information corresponding to the first sample image.

In all embodiments, the facial identification information is implemented as a second identification feature representation represented in a matrix form.

Operation 612: Obtain the predicted noise data under a condition of using the facial identification information as reference information and reducing noise in the sample noisy image.

In all embodiments, after the facial identification information is determined, the sample noisy image approaches the facial identification information, so as to enable an image obtained by denoising the sample noisy image to better display the facial identification information than the sample noisy image, and noise that is predicted in the approaching process and needs to denoise the sample noisy image is referred to as predicted noise data. The predicted noise data is determined based on the sample noisy image under a condition that the facial identification information is used as guidance information.

In all embodiments, the facial identification information is implemented as the above image guidance information, and the image guidance information is configured for predicting the noise in the sample noisy image when the sample noisy image is denoised.

In all embodiments, the facial keypoint information corresponding to the first sample image, the global image information corresponding to the second sample image, and the facial identification information are used as the image guidance information to make the sample noisy image approach the image guidance information, so as to enable an image obtained after the sample noisy image is denoised to better display the image guidance information than the sample noisy image, so that the facial image replacement model predicts, as accurately as possible, noise that can more fully display the image guidance information.

By using the process of acquiring the facial identification information described in operation 611 to operation 612, face replacement can be performed while accuracy of the identity information is ensured.

Operation 621: Perform face segmentation on the second sample image to obtain a second facial region corresponding to the second sample image.

In all embodiments, face segmentation is performed on the second sample image by using a pre-trained image segmentation model, so as to obtain the second facial region corresponding to the second sample image.

The image segmentation model may be a high-resolution network (HRNet), and is configured to determine the second facial region from the second sample image.

Operation 622: Obtain predicted noise data based on the sample noisy image within a range of the second facial region.

In all embodiments, after the second facial region is determined, the face replacement image is generated by using the first sample image and the second sample image within the range of the second facial region.

In all embodiments, by using the facial keypoint information corresponding to the first sample image and the global image information corresponding to the second sample image as the image guidance information, the face replacement process is performed within the boundary of the second facial region to make the sample noisy image approach the image guidance information, so as to enable an image obtained after the sample noisy image is denoised to better display the image guidance information than the sample noisy image, so that the facial image replacement model can predict, as accurately as possible, noise that can more fully display the image guidance information, and a facial region from the generated face replacement image can be limited to the second facial region, thereby improving accuracy of generation of the face replacement image.

In all embodiments, the facial identification information is implemented as the above image guidance information, and by using the facial keypoint information corresponding to the first sample image, the global image information corresponding to the second sample image, and the facial identification information as the image guidance information, the face replacement process is performed within the boundary of the second facial region to make the sample noisy image approach the image guidance information, so as to enable an image obtained after the sample noisy image is denoised to better display the image guidance information than the sample noisy image, and a facial region from the generated face replacement image can be limited to the second facial region, so that the facial image replacement model predicts, as accurately as possible, noise that can more fully display the image guidance information, that is, predicted noise data.

By using the process of determining the second facial region described in operation 621 to operation 622, face replacement can be performed while region standardability is improved.

Operation 611 to operation 612 and operation 621 to operation 622 may be implemented in a sequential relationship (for example, operation 611 to operation 612 are first performed, and then operation 621 to operation 622 are performed; or operation 621 to operation 622 may be performed first, and then operation 611 to operation 612 may be performed); or may be implemented in a parallel relationship (for example, operation 611 to operation 612 are performed; or operation 621 to operation 622 are performed), or the like, which is not limited in all embodiments of the present disclosure.

In all embodiments of the present disclosure, the first sample image and the second sample image are analyzed, the facial identification information corresponding to the first sample image and/or the global image information corresponding to the second sample image are/is used as the image guidance information, and when face replacement is performed on the first sample image and the second sample image by using the facial image replacement model, the first sample image and the second sample image are analyzed more comprehensively, thereby facilitating the facial image replacement model to learn richer image information, to improve accuracy of acquisition of the predicted noise data by the facial image replacement model.

In all embodiments, the facial image replacement model includes an encoder network, a noise prediction network, and a decoder network. The encoder network is configured to extract deep feature representation of the first sample image, the second sample image, and the sample noisy image. For example, the predicted noise data is obtained by using the sample noisy image at a current moment. As shown in FIG. 7, operation 230 shown in FIG. 2 above may alternatively be implemented as the following operation 710 to operation 740. Operation 240 shown in FIG. 2 above may alternatively be implemented as the following operation 750 to operation 770.

Operation 710: Input the sample replacement image into the encoder network, to obtain an image feature representation corresponding to the sample replacement image. Noise addition is performed on the image feature representation n times in the time dimension by using sample noise data, to obtain a noisy image feature representation.

In all embodiments, after the sample replacement image corresponding to the first sample image and the second sample image is obtained, the sample replacement image is inputted into the encoder network, and the encoder network performs feature extraction on the sample replacement image, to obtain the image feature representation corresponding to the sample replacement image. Noise addition is performed on the image feature representation n times in the time dimension by using sample noise data, and an $n^{th}$ noisy image feature representation is determined as the noisy image feature representation.

Operation 720: Input the first sample image and the second sample image to the encoder network, to obtain a sample image feature representation representing the first sample image and the second sample image.

The sample image feature representation is a feature matrix obtained by combining a first sample feature representation corresponding to the first sample image with a second sample feature representation corresponding to the second sample image by using a concat function. The first sample feature representation and the second sample feature representation may be connected by using the concat function, but the two sample feature representation may not be changed.

FIG. 8 is a schematic diagram of a model structure of a facial image replacement model. When model training is performed on the facial image replacement model, the facial image replacement process is implemented by using the first sample image, the second sample image, and the sample replacement image.

In all embodiments, a sample replacement image 830 (not shown, represented by yt) is inputted to the encoder network of the facial image replacement model, to obtain a noisy image feature representation corresponding to a sample noisy image obtained by performing noise-addition processing on the sample replacement image 830 n times.

In all embodiments, a first sample image 810 and a second sample image 820 are inputted to the facial image replacement model. In all embodiments, image dimensions of the first sample image 810, the second sample image 820, and the sample replacement image 830 are cropped to 512*512. Considering that the first sample image 810, the second sample image 820, and the sample replacement image 830 are color (three-channel) images, each image is represented by 3*512*512. 6*512*512 is configured for representing a sample image feature representation obtained by combining 3*512*512 of the first sample image 810 and 3*512*512 of the second sample image 820 by using the concat function. "6" may be understood as connecting two three-channel images. scr is an abbreviation of source represented by the first sample image 810. tar is an abbreviation of target represented by the second sample image 820. yt is configured for representing the sample replacement image 830.

Deep feature extraction is performed, by using the encoder network in the facial image replacement model, on a sample noisy image obtained after noise addition on the first sample image 810, the second sample image 820, and the sample replacement image 830.

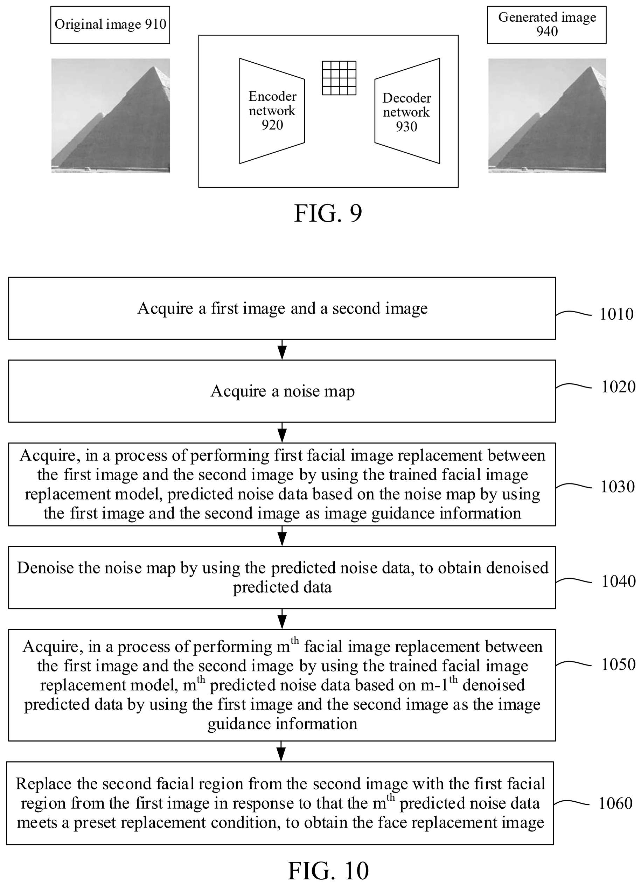

FIG. 9 is a schematic diagram of a framework structure of an encoder network-a decoder network. After an original image 910 is inputted to an encoder network 920 (an image encoder network), the encoder network 920 compresses the original image with high resolution, and finally converts the original image into a low-dimensional latent feature representation. A data dimension in which the latent feature representation is located may be described as a latent space. The latent feature representation is a low-dimensional feature representation obtained after processing by the encoder network. Subsequently, the low-dimensional feature representation is inputted to a decoder network 930, and is restored to a high-resolution generated image 940.

In the facial image replacement model shown in FIG. 8, the encoder network and the decoder network are symmetrically disposed. The following embodiment describes a network structure between the encoder network and the decoder network in FIG. 8.

As shown in FIG. 8, after deep feature extraction is performed on the first sample image 810 and the second sample image 820 by using the encoder network, a sample image feature representation representing the first sample image and the second sample image, that is, 8*64*64, is obtained. The sample image feature representation is a feature matrix obtained by combining a first sample feature representation corresponding to the first sample image with a second sample feature representation corresponding to the second sample image by using the concat function. That is, the sample image feature representation 8*64*64 is a feature matrix obtained by combining the first sample feature representation 4*64*64 with the second sample feature representation 4*64*64 by using the concat function. To reduce memory consumption and computational complexity, the UNet shown in FIG. 8 performs calculation in a low dimension of the latent space. The latent space is a low-dimensional space configured for representing data in machine learning. The latent space refers to a compressed representation of all useful information included in the data. The latent space may be generated by using various methods, such as principal component analysis (PCA) and a deep neural network (DNN). PCA is a linear dimensionality reduction method, which generates the latent space by searching for a linear combination of original data. DNN is a nonlinear dimensionality reduction method, which generates the latent space by using a nonlinear relationship in learning data. Therefore, a quantity of dimensions of the latent space is lower than that of an original data space. For example, the first sample image 810 and the second sample image 820 are both three-channel images with 512*512 pixels, which are respectively represented by 3*512*512, and are respectively represented by 4*64*64 in the latent space after being compressed by the encoder layer, thereby obtaining a sample image feature representation 8*64*64 representing the first sample image and the second sample image.

In addition, after deep feature extraction is performed, by using the encoder network, on the sample noisy image after noise addition on the sample replacement image 830, a noisy image feature representation representing the sample noisy image, that is, 4*64*64, is obtained.

In all embodiments, FIG. 8 shows a pre-trained face replacement network 800. The pre-trained face replacement network 800 is configured to obtain a sample replacement image based on the first sample image 810 and the second sample image 820.

In all embodiments, face replacement is performed on the first sample image 810 and the second sample image 820 by using the pre-trained face replacement network 800, to obtain the sample replacement image. Then, noise addition is performed on the sample replacement image n times in the time dimension to obtain a sample noisy image, where n is a positive integer.

Operation 730: Resize a second facial region from the second sample image, to obtain a mask feature representation corresponding to the second facial region.

In all embodiments, the second sample image 820 is inputted to a pre-trained image segmentation network (that is, the foregoing image segmentation model, not shown in FIG. 8), to obtain a second facial region (mask) corresponding to a face. The mask is configured for representing a region where face replacement is required.

In all embodiments, the mask is resized to obtain an image whose dimension is 64*64, which is represented by 1*64*64. 1*64*64 is referred to as a mask feature representation, and 1 represents a single channel.

Operation 740: Input the sample image feature representation, the noisy image feature representation, and the mask feature representation to a noise prediction network, to obtain predicted noise data.

As shown in FIG. 8, a sample image feature representation 8*64*64, a noisy image feature representation 4*64*64, and a mask feature representation 1*64*64 are inputted to a noise prediction network, to perform noise prediction by using the sample image feature representation 8*64*64, the mask feature representation 1*64*64, and the noisy image feature representation 4*64*64.

In all embodiments, the sample image feature representation 8*64*64 and the mask feature representation 1*64*64 are used as image guidance information to make the noisy image feature representation 4*64*64 approach the image guidance information, to obtain the predicted noise data by prediction. The image guidance information is reference information inputted to the UNet.

In all embodiments, the sample image feature representation and the mask feature representation are used as the image guidance information, a first feature distance between the noisy image feature representation and the sample image feature representation is determined, and a second feature distance between the noisy image feature representation and the mask feature representation is determined. A feature distance refers to a distance between feature vectors represented by two image feature representations.

In all embodiments, the sample image feature representation and the mask feature representation are used as the image guidance information to make the noisy image feature representation approach the mask feature representation while making the noisy image feature representation approach the sample image feature representation as close as possible. In all embodiments, the first feature distance between the noisy image feature representation and the sample image feature representation and the second feature distance between the noisy image feature representation and the mask feature representation are determined in a vector space.

In all embodiments, the predicted noise data is obtained with an objective of reducing the first feature distance to a first preset threshold and the second feature distance to a second preset threshold.

In all embodiments, the second feature distance is reduced while the first feature distance is reduced, so as to obtain the predicted noise data by prediction. Alternatively, a sum of the first feature distance and the second feature distance is determined, to obtain the predicted noise data by prediction with an objective of reducing the sum of the first feature distance and the second feature distance to a preset threshold.

In all embodiments, the facial image replacement model further includes an identification acquisition layer; and identification analysis is performed on the first sample image by using the identification acquisition layer, to obtain an image identification feature representation corresponding to the first sample image.

As shown in FIG. 8, the facial image replacement model further includes an identification acquisition layer. The identification acquisition layer is configured to analyze an identity of the first sample image 810.

In all embodiments, the identification acquisition layer performs an IDentity (ID) analysis process by using a pre-trained ArcFace model. Therefore, the identification acquisition layer is represented by ID ArcFace in FIG. 8. When the image identification feature representation corresponding to the first sample image is acquired by using the ID ArcFace, the following four operations are included.

(1) An ID feature (first identification feature representation) of 1*512 dimensions is obtained by using a pre-trained identification recognition network (net Arc).

(2) Multi-layer non-linear mapping is performed on the ID feature by using a mapper (5-layer transformer network), to obtain an encoded feature representation. The encoded feature representation is more related to the face replacement process.

(3) The encoded feature representation is normalized in the feature dimension by using the layerNorm layer, to obtain a normalized feature representation.

(4) Given that the image identification feature representation needs to be analyzed by using the noise prediction network and a condition module of the noise prediction network requires an input size of the feature representation to be 768, which corresponds to a 768-dimensional vector, the normalized feature representation may be mapped to 768 dimensions, that is, Proj_out to 768 dimensions, by using the fully connected layer, so that the second identification feature representation corresponding to the first sample image is represented by 1*1*768. "1*1" denotes a padding dimension.

The second identification feature representation is configured for representing facial identification information of the first sample image. For example, the second identification feature representation is a feature representation determined based on information such as facial feature distribution and a face width, and is configured for more accurately confirming an identity of a person presented in the first sample image. For different images of a same person, values of the 768 dimensions of the second identification feature representation are the same or basically the same. For images of different persons, values of the 768 dimensions of the second identification feature representation thereof are clearly different. Therefore, the second identification feature representation may be used as the facial identification information corresponding to the first sample image to represent first facial region identity information. The first sample feature representation corresponding to the first sample image is configured for representing overall image information of the first sample image, including identity information of a person presented in the first sample image and also including background information such as a building and a location presented in the first sample image.

In all embodiments, the noise prediction network uses the UNet in stable diffusion, and inputs the image identification feature representation 1*1*768 to the UNet as a condition of the UNet. The condition herein may also be understood as input data of the UNet.

In all embodiments, the image identification feature representation, the sample image feature representation, the noisy image feature representation, and the mask feature representation are inputted to the noise prediction network, to obtain the predicted noise data.

In all embodiments, the second identification feature representation 1*1*768, the sample image feature representation 8*64*64, and the mask feature representation 1*64*64 are used as image guidance information to make the noisy image feature representation 4*64*64 approach the image guidance information, to obtain the predicted noise data by prediction.

In all embodiments, the sample image feature representation, the mask feature representation, and the second identification feature representation are used as the image guidance information, a first feature distance between the noisy image feature representation and the sample image feature representation is determined, a second feature distance between the noisy image feature representation and the mask feature representation is determined, and a third feature distance between the noisy image feature representation and the second identification feature representation is determined.

In all embodiments, the sample image feature representation and the mask feature representation are used as the image guidance information to achieve approximation between the noisy image feature representation and the mask feature representation and approximation between the noisy image feature representation and the second identification feature representation while maximizing approximation between the noisy image feature representation and the sample image feature representation.

In all embodiments, the predicted noise data is obtained with an objective of reducing the first feature distance to a first preset threshold, the second feature distance to a second preset threshold, and the third feature distance to a third preset threshold.

In all embodiments, the second feature distance and the third feature distance are reduced while the first feature distance is reduced, so as to obtain the predicted noise data by prediction. Alternatively, a sum of the first feature distance, the second feature distance, and the third feature distance is determined, to obtain the predicted noise data by prediction with an objective of reducing the sum of the first feature distance, the second feature distance, and the third feature distance to a preset threshold.

The foregoing is merely an illustrative example. This is not limited in the embodiments of the present disclosure.

Operation 750: Acquire a noise loss value based on the difference between the sample noise data and the predicted noise data.

In all embodiments, predicted noise data and sample noise data that is obtained when noise-addition processing is performed on the sample replacement image are acquired, and a difference between the sample noise data and the predicted noise data is determined as a noise loss value.

In all embodiments, the sample image feature representation, the noisy image feature representation, and the mask feature representation are inputted to the noise prediction network, to obtain n pieces of predicted noise data, the n pieces of predicted noise data are in one-to-one correspondence to n noise addition processes, each of the n noise addition processes corresponds to one piece of sample noise data, the n noise addition processes correspond to n pieces of sample noise data, and the n pieces of predicted noise data are in one-to-one correspondence to the n pieces of sample noise data.

In all embodiments, when the n pieces of sample noise data are the same, in a process of performing n iterations of noise addition on the sample replacement image, a noise value of the sample noise data used in each noise addition is the same. n noise loss values are obtained based on differences between the n pieces of predicted noise data and the sample noise data.

In all embodiments, when the n pieces of sample noise data are different, in the process of performing n iterations of noise addition on the sample replacement image, a noise value of the sample noise data used in each noise addition may be different. A corresponding relationship of one-to-one correspondence between the n pieces of predicted noise data and the n pieces of sample noise data is determined, a difference between the predicted noise data and the sample noise data having a corresponding relationship therewith is determined based on the corresponding relationship, so as to obtain a noise loss value, and the n noise loss values are determined.

In all embodiments, when the n pieces of sample noise data are different, the n pieces of sample noise data may alternatively be determined by using a noise difference relationship between the n noisy images. Schematically, first sample noise data is determined based on the sample replacement image and a first noisy image; an $i^{th}$ piece of sample noisy data is determined based on an $i^{th}$ noisy image and an $i+1^{th}$ noisy; and an $n^{th}$ piece of sample noisy data is determined based on an $n-1^{th}$ noisy image and an $n^{th}$ noisy image, where i is a positive integer no greater than n.

The following formula (3) shows a loss function calculation formula of a noise loss value.

$$L = E_{t,y0,\varepsilon} \parallel \varepsilon\theta(y_t, Xsrc, Xtar, Xmask, c, t) - \varepsilon \parallel^2 \qquad (3)$$

where $L$ is configured for representing a noise loss value; $t$ is configured for representing time-series information, and is considered as a facial region replacement process at any moment herein; $y0$ represents a sample noisy image; $\varepsilon$ is noise; $E_{t,y0,\varepsilon}$ is configured for representing a mean square error obtained by calculation based on the time-series information $t$, the sample noisy image $y0$, and the noise $\varepsilon$; $\varepsilon\theta$ is configured for representing a noise prediction network (UNet), and $\varepsilon\theta(y_t, Xsrc, Xtar, Xmask, c, t)$ is configured for representing a noise loss value under the time-series information t predicted after the sample noisy image $y_t$, a first sample image $Xsrc,$ a second sample image $Xtar,$ a second facial region $Xmask,$ an image identification feature representation $c$, and the time-series information $t$ are inputted to the UNet and by using the second facial region $Xmask$ and the image identification feature representation $c$ as a condition (input) and using the first sample image $Xsrc$ and the second sample image $Xtar$ as image guidance information (alternatively,the second facial region $Xmask,$ the image identification feature representation $c$, the first sample image $Xsrc,$ and the second sample image $Xtar$ may be used as the image guidance information); and $\varepsilon$ is configured for representing sample noise data.

The foregoing is merely an illustrative example. This is not limited in the embodiments of the present disclosure.

Operation 760: Train the noise prediction network in the facial image replacement model by using the noise loss value, and obtain a trained noise prediction network when the noise loss value calculated by using a loss function reaches a convergence state.

In all embodiments, model training is performed on the facial image replacement model n times to obtain n noise loss values; and the noise prediction network in the facial image replacement model is trained by using the n noise loss values, and a trained noise prediction network is obtained after training is completed n times.

As shown in FIG. 8, the noise prediction network UNet in the facial image replacement model is trained n times by using the sample noisy image, to obtain a trained noise prediction network.

Operation 770: Determine the facial image replacement model including the trained noise prediction network as the trained facial image replacement model.

In all embodiments, the facial image replacement model including the trained noise prediction network is determined as the trained facial image replacement model.

The foregoing is merely an illustrative example. This is not limited in the embodiments of the present disclosure.

In all embodiments of the present disclosure, a structure of the facial image replacement model is described. After deep feature extraction is performed on the first sample image and the second sample image by using the encoder network, a latent feature representation of the first sample image and the second sample image is acquired, and further, the first sample image and the second sample image are fully analyzed based on the sample image feature representation, the noisy image feature representation, the mask feature representation, and the image identification feature representation, so that, by using the UNet in the stable diffusion model, more targeted analysis can be performed on the noisy image feature representation by using the sample image feature representation, the mask feature representation, and the image identification feature representation as the image guidance information (condition), and the noise prediction network is more comprehensively trained by using the predicted noise data, to obtain the trained facial image replacement model.

In all embodiments, after the trained facial image replacement model is obtained, a face replacement process is performed on the first image and the second image by using the trained facial image replacement model, and by using an acquired noise map, a process of acquiring a more stable face replacement image is achieved by using a denoising process of the noise map by using the first image and the second image as guidance information. As shown in FIG. 10, after operation 240 shown in FIG. 2 above, the method may further include the following operation 1010 to operation 1060.

Step 1010: Acquire a first image and a second image.

The first image is used to replace the second facial region of the second image with the first facial region.

In all embodiments, the first image is a source image, the second image is a target image, a face replacement image is generated by using the first image and the second image, and in the face replacement image, facial feature information, identity information, and the like on the first image need to be retained as accurately as possible, and expression information, background information, angle information, and the like on the second image need to be retained as much as possible.

In all embodiments, the first image and the second image are two randomly selected images with facial regions, for example, a first image and a second image captured by an image capturing device; or a first image and a second image captured by video screenshot; or a first image and a second image captured by network downloading.

Operation 1020: Acquire a noise map.

In all embodiments, the noise map is a randomly acquired map representing noise data; or the noise map is a preset map representing noise data.

The noise map is used to replace the second facial region of the second image with the first facial region by denoising.

In all embodiments, an image dimension of the first image is the same as that of the second image. For example, the image dimension of the first image is the same as that of the second image by cropping.

In all embodiments, a dimension of the noise map is the same as the image dimension of the first image and the image dimension of the second image.

In all embodiments, in a process of performing facial image replacement between the first image and the second image by using the trained facial image replacement model, by using the first image and the second image as image guidance information, the noise map is denoised to obtain the face replacement image.

In all embodiments, a process of determining predicted noise data related to the noise map and performing denoising includes the following operation 1030 to operation 1060.

Operation 1030: Acquire, in a process of performing first facial image replacement between the first image and the second image by using the trained facial image replacement model, predicted noise data based on the noise map by using the first image and the second image as image guidance information.

The predicted noise data is data that is obtained by prediction by using the trained facial image replacement model and represents a noise situation, for example, represents quantized features of noise.

In all embodiments, the first image, the second image, and the noise map are used as input to the facial image replacement model, and the first image and the second image are used as image guidance information, to determine predicted noise data on how to perform more targeted denoising on the noise map.

In all embodiments, facial keypoint information in the first image and global image information in the second image are acquired, and at least one of the facial keypoint information and the global image information is used as image guidance information to make the noise map approach the image guidance information, to obtain predicted noise data by prediction.

In all embodiments, facial identification information and facial keypoint information in the first image and global image information in the second image are acquired, and the facial identification information, the facial keypoint information, and the global image information are used as image guidance information to make the noise map approach the image guidance information, to obtain predicted noise data by prediction.

In all embodiments, facial identification information and facial keypoint information in the first image and global image information and a second facial region from the second image are acquired, and the facial identification information, the facial keypoint information, the global image information, and the second facial region are used as image guidance information to make the noise map approach the image guidance information, to obtain predicted noise data by prediction.

As shown in FIG. 8, a trained facial image replacement model is obtained upon completion of training of the facial image replacement model. When the trained facial image replacement model is applied, a sample image feature representation 8*64*64 and a noisy image feature representation 4*64*64 that are outputted by the encoder network are received by using the UNet, a mask feature representation 1*64*64 after resizing and an image identification feature representation 1*1*768 that is from an identification acquisition layer ID ArcFace are received, so as to obtain predicted noise data by prediction based on a plurality of feature representations.

Operation 1040: Denoise the noise map by using the predicted noise data, to obtain denoised predicted data.

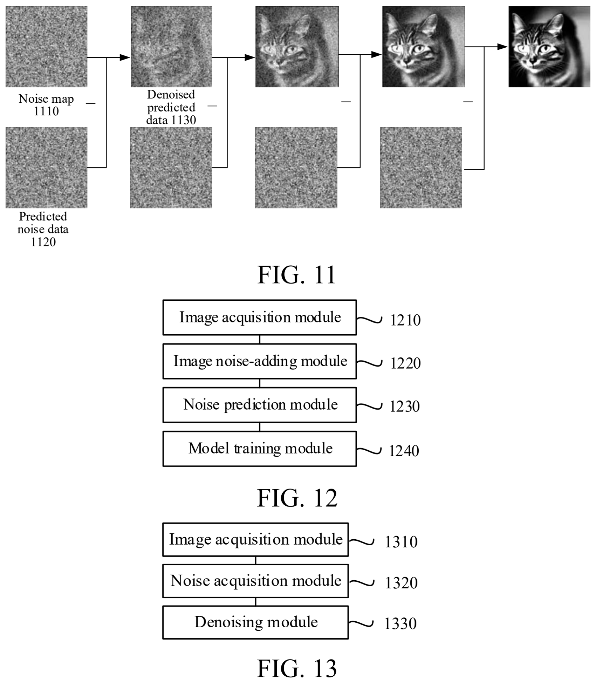

FIG. 11 is a schematic diagram of denoising. An initial stage (stage zero) includes a noise map 1110 and predicted noise data 1120. The noise map 1110 is denoised based on the predicted noise data 1120, to obtain denoised predicted data 1130 in a first stage.

Operation 1050: Acquire, in a process of performing $m^{th}$ facial image replacement between the first image and the second image by using the trained facial image replacement model, $m^{th}$ predicted noise data based on $m-1^{th}$ denoised predicted data by using the first image and the second image as the image guidance information.

m is a positive integer greater than 1.

In all embodiments, after the predicted noise data and the denoised predicted data that are obtained after the first face replacement process are obtained, the denoised predicted data obtained after the first face replacement process is referred to as first denoised predicted data, and the first denoised predicted data is used as input to the second facial image replacement process, that is, the second facial image replacement process is performed based on the first denoised predicted data, the first image, and the second image. In this way, by using the first image and the second image as image guidance information, predicted noise data after the second face replacement process acquired based on the first denoised predicted data is referred to as second predicted noise data.

The noise map is denoised by using the second predicted noise data, to obtain the second denoised predicted data.

In all embodiments, after the second predicted noise data and the second denoised predicted data are obtained, the second denoised predicted data is used as input to the third facial image replacement process, that is, the second facial image replacement process is performed based on the second denoised predicted data, the first image, and the second image. In this way, by using the first image and the second image as image guidance information, predicted noise data after the third face replacement process acquired based on the second denoised predicted data is referred to as third predicted noise data.

Operation 1060: Replace the second facial region from the second image with the first facial region from the first image in response to that the $m^{th}$ predicted noise data meets a preset replacement condition, to obtain the face replacement image.

In all embodiments, the preset replacement condition is set in advance. For example, the preset replacement condition is a preset quantity of times. For example, the preset quantity of times is 50. After the predicted noise data is obtained 50 times, a face replacement image after the second facial region from the second image is replaced with the first facial region is obtained.

That is, the foregoing process of denoising the noise map based on the first image and the second image is an iterative process, and the iterative process may be further briefly described as the following operations.

(1) A first image Xsrc and a second image Xtar whose dimensions are 512*512 are inputted to the encoder in the trained facial image replacement model, to obtain an image feature representation of 8*64*64.

(2) The second image Xtar is inputted to the pre-trained image segmentation network to obtain an image region mask of 64*64.

(3) The first image Xsrc is inputted to the IDArcFace network in the trained facial image replacement model to obtain an identification feature representation of 1*768 dimensions.

(4) In a process of performing first face replacement between the first image and the second image by using the trained facial image replacement model, a noise map (for example, a noise map including random noise data) is acquired, and the noise map is inputted to the encoder to obtain a denoised feature representation of 4*64*64.

(5) The denoised feature representation, the image feature representation, the image region mask, and the identification feature representation are inputted to the UNet, and by using the image feature representation, the image region mask, and the identification feature representation as image guidance information, prediction is performed based on the denoised feature representation to obtain predicted noise data.

(6) The noise map is processed by using the predicted noise data, to obtain denoised predicted data (a prediction result Xt).

(7) In a process of performing first face replacement between the first image and the second image by using the trained facial image replacement model after the denoised predicted data is acquired, the denoised predicted data is inputted to the encoder, to obtain a denoised feature representation of 4*64*64.

(8) The denoised feature representation, the image feature representation, the image region mask, and the identification feature representation are inputted to the UNet, and by using the image feature representation, the image region mask, and the identification feature representation as image guidance information, prediction is performed based on the denoised feature representation to obtain predicted noise data.

(9) The denoised predicted data is processed by using the predicted noise data, to obtain next piece of denoised predicted data. Xt-1=Xt-noise, where noise is the predicted noise data.

(10) Operation 7 to operation 9 are repeated until a preset quantity of times (for example, 50, 100, or the like) is reached to obtain X0.

(11) X0 is inputted to the decoder network, to obtain a face replacement image of 512*512.

The foregoing is merely an illustrative example. This is not limited in the embodiments of the present disclosure.

In all embodiments, the facial image replacement model includes an encoder network, a noise prediction network, and a decoder network; feature extraction is performed on the first image and the second image by using an encoder; predicted noise data is obtained based on a feature extraction result by using the decoder network, so as to obtain denoised predicted data based on the predicted noise data; and when $m^{th}$ predicted noise data meets a preset replacement condition, the $m^{th}$ predicted noise data is decoded by using the decoder network, so as to obtain a face replacement image after the second facial region from the second image is replaced with the first facial region from the first image.

In all embodiments, when the foregoing method is applied to a face replacement process in a video scenario, an image is obtained by video capturing, the image is inputted to an image segmentation model, a facial region is determined, the facial region is cropped, then a stable-diffusion-based face replacement process is performed based on the trained facial image replacement model, and a face replacement image is obtained and displayed.

During actual use, the trained facial image replacement model may cooperate and interact with another module. For example, first, an image input is received from a video capturing module, then face detection is performed, a facial region is obtained by cropping, then face replacement is performed by using the foregoing method, and display is performed.

In all embodiments of the present disclosure, the face replacement image is restored from the noise map by denoising by using the image guidance information based on the first image and the second image, so that a problem that the face replacement image cannot be accurately generated with high quality when the first image and the second image have relatively low image quality can be prevented. Noise interference can be prevented to a greater extent by using a denoising process of the noise map. Even in a large pose scenario and an occlusion scenario, a more stable face replacement image can be generated by using a robustness-enhanced trained facial image replacement model. Therefore, there are a wider range of application scenarios.

FIG. 12 is a structural block diagram of a facial image replacement apparatus according to embodiments of the present disclosure. As shown in FIG. 12, the apparatus includes the following parts:

an image acquisition module 1210, configured to acquire a first sample image, a second sample image, and a sample replacement image, the sample replacement image being an image obtained by replacing a second facial region from the second sample image with a first facial region from the first sample image;

an image noise-adding module 1220, configured to perform noise addition on the sample replacement image n times in a time dimension by using sample noise data, to obtain a sample noisy image, n being a positive integer;

a noise prediction module 1230, configured to obtain predicted noise data based on the sample noisy image in a process of performing facial region replacement between the first sample image and the second sample image by using a facial image replacement model, the predicted noise data being configured for restoring the sample replacement image based on the sample noisy image; and

a model training module 1240, configured to train the facial image replacement model by using a difference between the sample noise data and the predicted noise data, to obtain a trained facial image replacement model, the trained facial image replacement model being configured to replace a second facial region from a second image with a first facial region from a first image.

In all embodiments, the noise prediction module 1230 is further configured to acquire facial keypoint information in the first sample image, the facial keypoint information including a plurality of facial keypoints, and the plurality of facial keypoints being configured for describing keypoints of facial features in the first facial region; acquire global image information in the second sample image, the global image information including at least one of image angle information, image background information, and facial expression information; and obtain the predicted noise data by prediction based on at least one of the facial keypoint information and the global image information and the sample noisy image.

In all embodiments, the noise prediction module 1230 is further configured to use at least one of the facial keypoint information and the global image information as image guidance information, the image guidance information being configured for predicating noise in the sample noisy image when denoising of the sample noisy image; and obtain the predicted noise data under a condition of using the image guidance information as reference information and reducing noise in the sample noisy image.

In all embodiments, the noise prediction module 1230 is further configured to acquire facial identification information from the first sample image based on the first facial region of the first sample image, the facial identification information being configured for representing identity information represented by the first facial region; and obtain the predicted noise data under a condition of using the facial identification information as reference information and reducing noise in the sample noisy image.

In all embodiments, the noise prediction module 1230 is further configured to obtain a first identification feature representation by inputting the first sample image to an identification recognition network, the identification recognition network being a pre-trained neural network; perform non-linear mapping on the first identification feature representation by using a transformer network, to obtain an encoded feature representation; and pass the encoded feature representation through a normalization layer, to perform normalization processing on the encoded feature representation in a feature dimension to obtain a normalized feature representation; and pass the normalized feature representation through a fully connected layer, to obtain a second identification feature representation corresponding to the first sample image, and use the second identification feature representation as the facial identification information corresponding to the first sample image.

In all embodiments, the noise prediction module 1230 is further configured to perform face segmentation on the second sample image by using a pre-trained image segmentation model, to obtain the second facial region corresponding to the second sample image; and obtain the predicted noise data based on the sample noisy image within a range of the second facial region.

In all embodiments, the facial image replacement model includes an encoder network and a noise prediction network;

the noise prediction module 1230 is further configured to input the sample replacement image into the encoder network, to obtain an image feature representation corresponding to the sample replacement image; perform noise addition on the image feature representation n times in the time dimension by using the sample noise data, to obtain a noisy image feature representation; and input the first sample image and the second sample image to the encoder network, to obtain a sample image feature representation representing the first sample image and the second sample image, the sample image feature representation being a feature matrix that is obtained by combining a first sample feature representation corresponding to the first sample image with a second sample feature representation corresponding to the second sample image by using a concat function; resize the second facial region from the second sample image, to obtain a mask feature representation corresponding to the second facial region; and input the sample image feature representation, the noisy image feature representation, and the mask feature representation to the noise prediction network, to obtain the predicted noise data.

In all embodiments, the facial image replacement model further includes an identification acquisition layer; and the noise prediction module 1230 is further configured to perform identification analysis on the first sample image by using the identification acquisition layer, to obtain a second identification feature representation corresponding to the first sample image; and input the second identification feature representation, the sample image feature representation, the noisy image feature representation, and the mask feature representation to the noise prediction network, to obtain the predicted noise data.

In all embodiments, the image noise-adding module 1220 is further configured to perform n iterations of noise addition on the sample replacement image in the time dimension, to obtain the n noisy images distributed in time series, where an $n^{th}$ noisy image is the sample noisy image.

In all embodiments, the image noise-adding module 1220 is further configured to select n moments in the time dimension according to time-series distribution; perform the noise-addition on the sample replacement image at the n moments by using a preset noise-addition policy, to obtain n noisy images distributed in time series, where an $n^{th}$ noisy image is the sample noisy image, and the preset noise-addition policy is determined based on a moment parameter related to a moment and a noise parameter related to the sample noise data.

In all embodiments, the model training module 1240 is further configured to acquire a noise loss value based on the difference between the sample noise data and the predicted noise data; train the noise prediction network in the facial image replacement model by using the noise loss value, and obtain a trained noise prediction network when the noise loss value calculated by using a loss function reaches a convergence state; and determine the facial image replacement model including the trained noise prediction network as the trained facial image replacement model.

FIG. 13 is a structural block diagram of a facial image replacement apparatus according to embodiments of the present disclosure. As shown in FIG. 13, the apparatus includes the following parts:

an image acquisition module 1310, configured to acquire a first image and a second image, the first image being used to replace the second image with a first facial region;

a noise acquisition module 1320, configured to acquire a noise map, the noise map being a randomly acquired or preset map representing noise data, and used to replace the second image with the first facial region by denoising; and

a denoising module 1330, configured to replace, in a process of performing facial image replacement between the first image and the second image by using a trained facial image replacement model, a second facial region of the second image with a first facial region of the first image by denoising the noise map by using the first image and the second image as image guidance information, to obtain the face replacement image.

In all embodiments, the denoising module 1330 is further configured to acquire, in a process of performing first facial image replacement between the first image and the second image by using the trained facial image replacement model, predicted noise data based on the noise map by using the first image and the second image as image guidance information; denoise the noise map by using the predicted noise data, to obtain denoised predicted data; acquire, in a process of performing $m^{th}$ facial image replacement between the first image and the second image by using the trained facial image replacement model, $m^{th}$ predicted noise data based on $m-1^{th}$ denoised predicted data by using the first image and the second image as the image guidance information, where m is a positive integer greater than 1; and replace the second facial region from the second image with the first facial region from the first image in response to that the $m^{th}$ predicted noise data meets a preset replacement condition, to obtain the face replacement image.

The facial image replacement apparatus provided in the foregoing embodiments is merely exemplified by using division of the foregoing functional modules. In a practical application, the foregoing functions may be allocated to and completed by different functional modules as required. In other words, an internal structure of the device is divided into different functional modules, to complete all or some of the functions described above. In addition, embodiments of the facial image replacement apparatus and the facial image replacement method provided in the foregoing embodiments belong to the same conception. For a specific implementation process thereof, reference may be made to the method embodiments. Details are not described herein again.

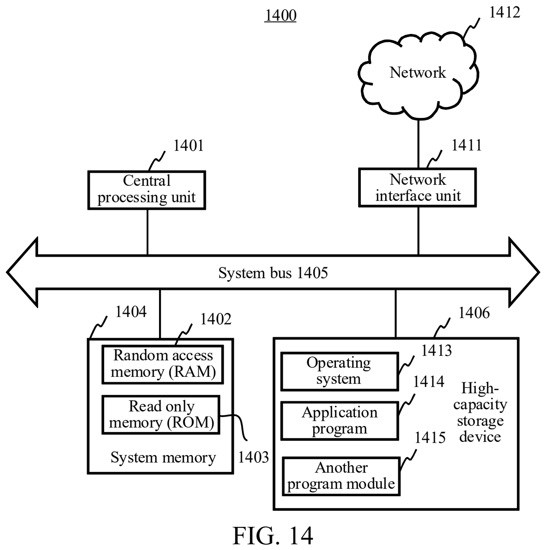

FIG. 14 is a schematic structural diagram of a server according to embodiments of the present disclosure. The server 1400 includes a central processing unit (CPU) 1401, a system memory 1404 including a random access memory (RAM) 1402 and a read only memory (ROM) 1403, and a system bus 1405 connecting the system memory 1404 and the CPU 1401. The server 1400 further includes a high-capacity storage device 1406 configured to store an operating system 1413, an application program 1414, and another program module 1415.

The mass storage device 1406 is connected to the CPU 1401 by using a high-capacity storage controller (not shown) connected to the system bus 1405. The high-capacity storage device 1406 and a computer-readable medium associated therewith provide non-volatile storage for the server 1400. That is, the high-capacity storage device 1406 may include a computer-readable medium (not shown) such as a hard disk or a compact disc ROM (CD-ROM) drive.

In all embodiments, the computer-readable medium may include a computer storage medium and a communication medium. The computer storage medium includes volatile and non-volatile media, and removable and non-removable media implemented by using any method or technology configured for storing information such as computer-readable instructions, data structures, program modules, or other data. The system memory 1404 and the high-capacity storage device 1406 may be collectively referred to as a memory.

According to the embodiments of the present disclosure, the computer device 1400 may further be connected, by using a network such as the Internet, to a remote computer on the network and run. That is, the server 1400 may be connected to a network 1412 by using a network interface unit 1411 that is connected to the system bus 1405, or may be connected to a network of another type or a remote computer system (not shown) by using the network interface unit 1411.

The foregoing memory further includes one or more programs. The one or more programs are stored in the memory and are configured to be executed by the CPU.

An embodiment of the present disclosure further provides a computer device. The computer device includes a processor and a memory. The memory has at least one instruction, at least one program, a code set, or an instruction set stored therein. The at least one instruction, the at least one program, the code set, or the instruction set is loaded and executed by the processor to implement the facial image replacement method provided in the foregoing method embodiments.

An embodiment of the present disclosure further provides a computer-readable storage medium. The computer-readable storage medium has at least one instruction, at least one program, a code set, or an instruction set stored therein. The at least one instruction, the at least one program, the code set, or the instruction set is loaded and executed by a processor to implement the facial image replacement method provided in the foregoing method embodiments.

An embodiment of the present disclosure further provides a computer program product or a computer program. The computer program product or the computer program includes computer instructions. The computer instructions are stored in a computer-readable storage medium. A processor of a computer device is configured to read the computer instructions from the computer-readable storage medium. The processor executes the computer instructions, causing the computer device to perform the facial image replacement method as described in any one of the foregoing embodiments.

The foregoing descriptions are merely embodiments of the present disclosure, and are not intended to limit the present disclosure. Any modification, equivalent replacement, improvement, and the like made within the spirit and principle of the present disclosure shall fall within the protection scope of the present disclosure.

**Claims**

1. A facial image replacement method, comprising:

acquiring a first sample image, a second sample image, and a sample replacement image, the sample replacement image being an image obtained by replacing a second facial region from the second sample image with a first facial region from the first sample image;

performing noise addition on the sample replacement image n times by using sample noise data, to obtain a sample noisy image, n being a positive integer;

obtaining predicted noise data based on the sample noisy image; and

training a facial image replacement model by using a difference between the sample noise data and the predicted noise data, to obtain a trained facial image replacement model;

wherein the trained facial image replacement model is configured to replace a second facial region from a second image with a first facial region from a first image.

2. The method according to claim 1, wherein the obtaining the predicted noise data based on the sample noisy image comprises:

acquiring facial keypoint information in the first sample image, the facial keypoint information comprising a plurality of facial keypoints, and the plurality of face keypoints including keypoints of facial features in the first facial region;

acquiring global image information in the second sample image, the global image information comprising at least one of image angle information, image background information, and facial expression information; and

obtaining the predicted noise data based on the sample noisy image and at least one of the facial keypoint information and the global image information.

3. The method according to claim 2, wherein the obtaining the predicted noise data based on the sample noisy image and the at least one of the facial keypoint information and the global image information comprises:

using the at least one of the facial keypoint information and the global image information as image guidance information, the image guidance information being configured for predicating noise in the sample noisy image when denoising the sample noisy image; and

obtaining the predicted noise data under a condition of using the image guidance information as reference information and reducing the noise in the sample noisy image to a preset noise threshold.

4. The method according to any one of claims 1 to 3, wherein the obtaining the predicted noise data based on the sample noisy image comprises:

acquiring facial identification information from the first sample image based on the first facial region of the first sample image, the facial identification information being configured for representing identity information represented by the first facial region; and

obtaining the predicted noise data under a condition of using the facial identification information as reference information and reducing the noise in the sample noisy image to a preset noise threshold.

5. The method according to claim 4, wherein the acquiring the facial identification information from the first sample image based on the first facial region of the first sample image comprises:

obtaining a first identification feature representation by inputting the first sample image to an identification recognition network, the identification recognition network being a pre-trained neural network;

performing non-linear mapping on the first identification feature representation by using a transformer network, to obtain an encoded feature representation; and

passing the encoded feature representation through a normalization layer, to perform normalization processing on the encoded feature representation in a feature dimension to obtain a normalized feature representation; and

passing the normalized feature representation through a fully connected layer, to obtain a second identification feature representation corresponding to the first sample image, and using the second identification feature representation as the facial identification information corresponding to the first sample image.

6. The method according to any one of claims 1 to 3, wherein obtaining the predicted noise data based on the sample noisy image comprises:

performing face segmentation on the second sample image by using a pre-trained image segmentation model, to obtain the second facial region corresponding to the second sample image; and

obtaining the predicted noise data within a range of the second facial region based on the sample noisy image.

7.  The method according to any one of claims 1 to 3, wherein the facial image replacement model comprises an encoder network and a noise prediction network;
    the performing the noise addition on the sample replacement image n times by using the sample noise data, to obtain the sample noisy image comprises:

    inputting the sample replacement image into the encoder network, to obtain an image feature representation corresponding to the sample replacement image; and performing the noise addition on the image feature representation n times by using the sample noise data, to obtain a noisy image feature representation; and
    the obtaining the predicted noise data based on the sample noisy image comprises:

    inputting the first sample image and the second sample image to the encoder network, to obtain a sample image feature representation representing the first sample image and the second sample image, the sample image feature representation being a feature matrix that is obtained by combining a first sample feature representation corresponding to the first sample image with a second sample feature representation corresponding to the second sample image by using a concat function;
    resizing the second facial region from the second sample image, to obtain a mask feature representation corresponding to the second facial region; and
    inputting the sample image feature representation, the noisy image feature representation, and the mask feature representation to the noise prediction network, to obtain the predicted noise data.

8.  The method according to claim 7, wherein the facial image replacement model further comprises an identification acquisition layer; and
    the inputting the sample image feature representation, the noisy image feature representation, and the mask feature representation to the noise prediction network, to obtain the predicted noise data comprises:

    performing identification analysis on the first sample image by using the identification acquisition layer, to obtain a second identification feature representation corresponding to the first sample image; and
    inputting the second identification feature representation, the sample image feature representation, the noisy image feature representation, and the mask feature representation to the noise prediction network, to obtain the predicted noise data.

9.  The method according to any one of claims 1 to 3, wherein the performing the noise addition on the sample replacement image n times by using the sample noise data, to obtain the sample noisy image comprises:

    performing n iterations of noise addition on the sample replacement image in a time sequence by using the sample noise data with a same noise value, to obtain n noisy images distributed in a time series, wherein an $n^{th}$ noisy image is the sample noisy image, and a noise difference between two adjacent noisy images in the n noisy images is the sample noise data;
    or
    performing n iterations of noise addition on the sample replacement image in a time sequence by using the sample noise data with different noise values, to obtain n noisy images distributed in a time series, wherein an $n^{th}$ noisy image is the sample noisy image; wherein a noise difference between a $v^{th}$ noisy image and a $v+1^{th}$ noisy image is the sample noise data used during a $v^{th}$ iteration of noise addition, and v is a positive integer no greater than n.

10. The method according to any one of claims 1 to 3, wherein the performing the noise addition on the sample replacement image n times by using the sample noise data, to obtain the sample noisy image comprises:

    selecting n moments according to a time sequence; and
    performing the noise-addition on the sample replacement image at the n moments by using a preset noise-addition policy, to obtain n noisy images distributed in a time series, wherein an $n^{th}$ noisy image is the sample noisy image, and the preset noise-addition policy is determined based on a moment parameter related to a moment and a noise parameter related to the sample noise data.

11. The method according to any one of claims 1 to 10, wherein the training the facial image replacement model by using the difference between the sample noise data and the predicted noise data to obtain the trained facial image replacement model comprises:

acquiring a noise loss value based on the difference between the sample noise data and the predicted noise data;
training the noise prediction network in the facial image replacement model by using the noise loss value, and obtaining a trained noise prediction network when the noise loss value calculated by using a loss function reaches a convergence state; and
determining the facial image replacement model comprising the trained noise prediction network as the trained facial image replacement model.

12. A facial image replacement method, comprising:

acquiring a first image and a second image;
acquiring a noise map, the noise map being a randomly acquired or preset map representing noise data;
replacing a second facial region of the second image with a first facial region of the first image by denoising the noise map by using the first image and the second image as image guidance information, to obtain the face replacement image.

13. The method according to claim 12, wherein the replacing the second facial region of the second image with the first facial region of the first image by denoising the noise map by using the first image and the second image as the image guidance information, to obtain the face replacement image comprises:

acquiring, in a process of performing first facial image replacement between the first image and the second image by using the trained facial image replacement model, predicted noise data based on the noise map by using the first image and the second image as the image guidance information;
denoising the noise map by using the predicted noise data, to obtain denoised predicted data;
acquiring, in a process of performing $m^{th}$ facial image replacement between the first image and the second image by using the trained facial image replacement model, $m^{th}$ predicted noise data based on $m-1^{th}$ denoised predicted data by using the first image and the second image as the image guidance information, wherein m is a positive integer greater than 1; and
replacing the second facial region from the second image with the first facial region from the first image in response to that the $m^{th}$ predicted noise data meets a preset replacement condition, to obtain the face replacement image.

14. A facial image replacement apparatus, comprising:

an image acquisition module, configured to acquire a first sample image, a second sample image, and a sample replacement image, the sample replacement image being an image obtained by replacing a second facial region from the second sample image with a first facial region from the first sample image;
an image noise-adding module, configured to perform noise addition on the sample replacement image n times by using sample noise data, to obtain a sample noisy image, n being a positive integer;
a noise prediction module, configured to obtain predicted noise data based on the sample noisy image; and
a model training module, configured to train a facial image replacement model by using a difference between the sample noise data and the predicted noise data, to obtain a trained facial image replacement model, the trained facial image replacement model being configured to replace a second facial region from a second image with a first facial region from a first image.

15. A facial image replacement apparatus, comprising:

an image acquisition module, configured to acquire a first image and a second image;
a noise acquisition module, configured to acquire a noise map, the noise map being a randomly acquired or preset map representing noise data;
a denoising module, configured to replace a second facial region of the second image with a first facial region of the first image by denoising the noise map by using the first image and the second image as image guidance information, to obtain the face replacement image.

16. A computer device, comprising a processor and a memory, the memory having at least one program stored therein, the at least one program being loaded and executed by the processor to implement the facial image replacement method according to any one of claims 1 to 13.

17. A computer-readable storage medium, the storage medium having at least one program stored therein, the at least one program being loaded and executed by a processor to implement the facial image replacement method according to any one of claims 1 to 13.

18. A computer program product or a computer program, comprising computer instructions, the computer instructions being stored in a computer-readable storage medium, a processor of a computer device reading the computer instructions from the computer-readable storage medium, and executing the computer instructions, to cause the computer device to perform the facial image replacement method according to any one of claims 1 to 13.

FIG. 1

Acquire a first sample image, a second sample image, and a sample replacement image — 210

Perform noise addition on the sample replacement image n times by using sample noise data, to obtain a sample noisy image — 220

Obtain predicted noise data based on the sample noisy image — 230

Train a facial image replacement model by using a difference between the sample noise data and the predicted noise data, to obtain a trained facial image replacement model — 240

FIG. 2

Acquire a first sample image, a second sample image, and a sample replacement image — 310

Perform noise addition on the sample replacement image n times in a time dimension by using sample noise data, to obtain a sample noisy image — 320

Acquire facial keypoint information in the first sample image in a process of performing facial region replacement between the first sample image and the second sample image by using the facial image replacement model — 330

Acquire global image information in the second sample image — 340

Obtain the predicted noise data by prediction based on at least one of the facial keypoint information and the global image information and the sample noisy image — 350

Train the facial image replacement model by using a difference between the sample noise data and the predicted noise data, to obtain a trained facial image replacement model — 360

FIG. 3

Second sample image 420

Expression

Angle

Sample replacement image 430

Background

Identity

First sample image 410

FIG. 4

Sample replacement image 510

Operation 1

Noisy image 511

Operation 2

Noisy image 512

Operation 3

Noisy image 513

Operation 4

Noisy image 514

Noise 1

Noise 2

Noise 3

Noise 4

FIG. 5

Perform noise addition on the sample replacement image n times by using sample noise data, to obtain a sample noisy image — 220

Acquire facial identification information from the first sample image based on the first facial region from the first sample image — 611

Perform face segmentation on the second sample image to obtain a second facial region corresponding to the second sample image — 621

Obtain the predicted noise data under a condition of using the facial identification information as reference information and reducing noise in the sample noisy image — 612

Obtain predicted noise data based on the sample noisy image within a range of the second facial region — 622

FIG. 6

EP 4 726 680 A1

| | |
|---|---|
| Input the sample-swapped image into the encoder network, to obtain an image feature representation corresponding to the sample-swapped image. Noise addition is performed on the image feature representation n times in the time dimension by using sample noise data, to obtain a noise-added image feature representation | 710 |
| Input the first sample image and the second sample image to the encoder network, to obtain a sample image feature representation representing the first sample image and the second sample image | 720 |
| Resize a second face region in the second sample image, to obtain a mask feature representation corresponding to the second face region | 730 |
| Input the sample image feature representation, the noise-added image feature representation, and the mask feature representation to a noise prediction network, to obtain predicted noise data | 740 |
| Acquire a noise loss value based on the difference between the sample noise data and the predicted noise data | 750 |
| Train the noise prediction network in the face image swapping model by using the noise loss value, and obtain a trained noise prediction network when the noise loss value calculated by using a loss function reaches a convergence state | 760 |
| Take the face image swapping model including the trained noise prediction network as the trained face image swapping model | 770 |

FIG. 7

FIG. 8

33

| Original image 910 | | Generated image 940 |
|---|---|---|

Encoder network 920

Decoder network 930

## FIG. 9

Acquire a first image and a second image — 1010

Acquire a noise map — 1020

Acquire, in a process of performing first facial image replacement between the first image and the second image by using the trained facial image replacement model, predicted noise data based on the noise map by using the first image and the second image as image guidance information — 1030

Denoise the noise map by using the predicted noise data, to obtain denoised predicted data — 1040

Acquire, in a process of performing $m^{th}$ facial image replacement between the first image and the second image by using the trained facial image replacement model, $m^{th}$ predicted noise data based on $m-1^{th}$ denoised predicted data by using the first image and the second image as the image guidance information — 1050

Replace the second facial region from the second image with the first facial region from the first image in response to that the $m^{th}$ predicted noise data meets a preset replacement condition, to obtain the face replacement image — 1060

## FIG. 10

Noise map 1110

Denoised predicted data 1130

Predicted noise data 1120

## FIG. 11

Image acquisition module — 1210

Image noise-adding module — 1220

Noise prediction module — 1230

Model training module — 1240

## FIG. 12

Image acquisition module — 1310

Noise acquisition module — 1320

Denoising module — 1330

## FIG. 13

1400

1412

Network

1401

Central
processing unit

1411

Network
interface unit

System bus 1405

1404

1402

Random access
memory (RAM)

Read only
memory (ROM)

System memory

1403

1406

1413

Operating
system

1414

Application
program

1415

Another
program module

High-
capacity
storage
device

FIG. 14

## INTERNATIONAL SEARCH REPORT

| International application No. |
|---|
| **PCT/CN2024/107768** |

| A. | CLASSIFICATION OF SUBJECT MATTER |
|---|---|

G06V 40/16(2022.01)i

According to International Patent Classification (IPC) or to both national classification and IPC

| B. | FIELDS SEARCHED |
|---|---|

Minimum documentation searched (classification system followed by classification symbols)

IPC:G06V

Documentation searched other than minimum documentation to the extent that such documents are included in the fields searched

Electronic data base consulted during the international search (name of data base and, where practicable, search terms used)

CNABS, CNTXT, DWPI, ENTXTC, ENTXT, CNKI, IEEE: 面部, 脸, 替换, 合成, 交换, 图像, 噪声, 训练, 模型, 预测, 扩散, 去噪, face, replace, composite, swap, image, noise, train, model, predict, diffuse, denoising

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 116704588 A (TENCENT TECHNOLOGY (SHENZHEN) CO., LTD.) 05 September 2023 (2023-09-05) see description, paragraphs 54-59, 64-186, 193-195, 210-222, 226-354, and 362-364 | 1-18 |
| X | KIM, K. H. et al. "DiffFace: Diffusion-based Face Swapping with Facial Guidance" *arXiv*, 27 December 2022 (2022-12-27), see text, pages 4-6 | 12, 13, 15-18 |
| A | CN 113627404 A (INSTITUTE OF AUTOMATION, CHINESE ACADEMY OF SCIENCES) 09 November 2021 (2021-11-09) entire document | 1-18 |
| A | CN 114820398 A (BEIJING HANYI INNOVATION TECHNOLOGY CO., LTD. et al.) 29 July 2022 (2022-07-29) entire document | 1-18 |
| A | US 2019332850 A1 (APPLE INC.) 31 October 2019 (2019-10-31) entire document | 1-18 |
| A | WO 2022135490 A1 (BIGO TECHNOLOGY PTE LTD. et al.) 30 June 2022 (2022-06-30) entire document | 1-18 |

☐ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **10 September 2024** | **10 October 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/107768**

| Patent document cited in search report | | | Publication date (day/month/year) | Patent family member(s) | | | Publication date (day/month/year) |
|---|---|---|---|---|---|---|---|
| CN | 116704588 | A | 05 September 2023 | CN | 116704588 | B | 05 September 2023 |
| | | | | HK | 40092362 | A0 | 22 December 2023 |
| | | | | HK | 40092362 | A1 | 01 March 2024 |
| CN | 113627404 | A | 09 November 2021 | CN | 113627404 | B | 14 January 2022 |
| CN | 114820398 | A | 29 July 2022 | CN | 114820398 | B | 04 November 2022 |
| US | 2019332850 | A1 | 31 October 2019 | US | 10762337 | B2 | 01 September 2020 |
| | | | | CN | 110415306 | A | 05 November 2019 |
| WO | 2022135490 | A1 | 30 June 2022 | CN | 112651915 | A | 13 April 2021 |
| | | | | CN | 112651915 | B | 29 August 2023 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310969507